(19) Europäisches Patentamt
European Patent Office
Office européen des brevets

(11) **EP 3 129 695 B1**

(12) **EUROPÄISCHE PATENTSCHRIFT**

(45) Veröffentlichungstag und Bekanntmachung des Hinweises auf die Patenterteilung:
**23.10.2019 Patentblatt 2019/43**

(21) Anmeldenummer: **15714235.7**

(22) Anmeldetag: **08.04.2015**

(51) Int Cl.:
*F16L 55/165* (2006.01)    *F16L 55/162* (2006.01)
*B32B 5/02* (2006.01)    *B32B 27/04* (2006.01)
*B32B 27/08* (2006.01)    *B32B 27/12* (2006.01)
*B32B 27/16* (2006.01)    *B32B 27/32* (2006.01)
*B32B 27/34* (2006.01)    *B32B 1/08* (2006.01)

(86) Internationale Anmeldenummer:
**PCT/EP2015/057643**

(87) Internationale Veröffentlichungsnummer:
**WO 2015/155258 (15.10.2015 Gazette 2015/41)**

(54) **POLYMERE MEHRSCHICHTFOLIE**

POLYMER MULTI-LYERED FILM

FILM POLYMÈRE MULTICOUCHE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.04.2014 DE 102014105085**

(43) Veröffentlichungstag der Anmeldung:
**15.02.2017 Patentblatt 2017/07**

(73) Patentinhaber: **Buergofol GmbH**
**93354 Siegenburg (DE)**

(72) Erfinder:
• **BOUTRID, Abdel-Kader**
**93354 Siegenburg (DE)**
• **STARK, Kurt**
**91284 Neuhaus a.d. Pegnitz (DE)**
• **SCHLEICHER, Franz**
**85053 Ingolstadt (DE)**

(74) Vertreter: **Schlief, Thomas P. et al**
**Canzler & Bergmeier**
**Patentanwälte Partnerschaft mbB**
**Friedrich-Ebert-Straße 84**
**85055 Ingolstadt (DE)**

(56) Entgegenhaltungen:
**EP-A2- 2 740 592     WO-A1-2010/075946**
**DE-A1-102010 023 764     US-A- 4 954 393**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft eine polymere Mehrschichtfolie gemäß Anspruch 1, eine Verwendung gemäß Anspruch 10-, einen Schlauchlining-Aufbau gemäß Anspruch 11 und einen sanierten Kanalabschnitt gemäß Anspruch 15.

Der Anwendungsbereich von Kunststofffolien mit mehrschichtigem Aufbau ist sehr umfangreich. Zu den Einsatzgebieten gehört neben der Verpackung von Lebensmitteln, als Membranfolie, als Kabelummantelung oder einer Verwendung im Textil und Bekleidungsbereich auch das sogenannte Schlauchlining-Verfahren für die grabenlose Kanalsanierung. Bei der grabenlosen Kanalsanierung entfällt ein Ausgraben zu sanierender Kanalabschnitte: Durch bereits bestehende Schachtöffnungen wird in den zu sanierenden Kanalabschnitt ein flexibler Schlauchaufbau eingebracht, der aushärtbare Formmassen enthält, aus denen vor Ort in dem zu sanierenden Kanalabschnitt ein Neurohr hergestellt wird.

Beispielsweise wird ein ein aushärtbares Harz umfassender Schlauchaufbau (bzw. Schlauchlining-Aufbau) in den zu sanierenden Kanal eingezogen, anschließend mit Druckluft aufgeblasen bis der Schlauchlining-Aufbau formschlüssig an der Kanalwand des zu sanierenden Kanals anliegt, und darauffolgend von innen aus dem aufgeblasenen Schlauchlining-Aufbau heraus ausgehärtet, sodass ein "Rohr im Rohr" entsteht. Nach der Aushärtung des Harzes werden gegebenenfalls die Hausanschlüsse mit einem Kanalroboter ausgefräst und mittels sogenannter Hutprofile mit dem sanierten Kanal verbunden.

Aufbau und Herstellung eines solchen Schlauchlining-Aufbaus sind dem Fachmann z.B. aus der WO 2007/054350 A1, DE 10 2007 038 869 B4 oder EP-B1 155 256 bekannt.

Der Schlauchlining-Aufbau des Stands der Technik besteht hierbei im Wesentlichen aus zwei Schlauchfolien von unterschiedlichem Durchmesser, zwischen denen eine mit einem aushärtbaren Harz getränkte Gewebeschicht vorgesehen ist. Eine solche Gewebeschicht kann einen Polyesternadelfilz oder ein Vlies aus Kunststofffasern, insbesondere Polyamidfasern oder ein Glasfasergewebe umfassen, um z.B. einen glasfaserverstärkten Kunststoff zu bilden.

Die eine, innenliegende Schlauchfolie (Schlauchinnenfolie) dient der lumenseitigen Begrenzung des Schlauchlining-Aufbaus, die zweite, außenliegende Schlauchfolie weist einen größeren Durchmesser auf als die Schlauchinnenfolie und begrenzt den Schlauchlining-Aufbau auf der kanalwandigen Seite. Die Eigenschaften der innen- und außenliegenden Schlauchfolien werden hierbei an die jeweiligen Erfordernisse der verwendeten Verfahrenstechnik zur grabenlosen Kanalsanierung angepasst: Ist das Harz des Schlauchlining-Aufbaus beispielsweise mit UV-Licht aushärtbar, so ist die außenliegende Schlauchfolie vorzugsweise undurchlässig für UV-Licht, um ein vorzeitiges Aushärten des Harzes z.B. durch Sonnenlicht außerhalb des zu sanierenden Kanals zu verhindern, während die Schlauchinnenfolie vorzugsweise durchlässig für UV- Licht ist, damit das Harz des Schlauchlining-Aufbaus aus dem Kanalinneren effizient ausgehärtet werden kann, wenn dieser in den zu sanierenden Kanal eingebracht worden ist, indem UV-Lichtquellen in das Lumen des aufgeblasenen Kanals eingebracht werden.

Außenliegende Schlauchfolien, die UV- und sichtbares Licht absorbieren, sind dem Fachmann beispielsweise aus der WP 2010/075946 A1 bekannt.

Schlauchinnenfolien, die UV-lichtdurchlässig sind, sind dem Fachmann beispielsweise aus der DE 20 2010 016 048 U1, EP 0167 742 A2, DE 10 2010 023 764 A1 und EP 0 342 897 A2 bekannt.

Die Länge und der Durchmesser des Schlauchlining-Aufbaus entsprechen dem Altrohr bzw. dem zu sanierenden Kanaltyp und die Wanddicke richtet sich nach den statischen Vorgaben und wird aus diesen berechnet. Die Filz oder GFK-Gewebeschicht des Schlauchlining-Aufbaus wird im Werk oder in einer mobilen Tränkungsanlage vor Ort mit Harz imprägniert. Ein geeignetes Harz ist überwiegend ein ungesättigtes Polyesterharz (ISO-NPG) oder ein Epoxidharz oder ein Vinylesterharz. In besonderen Fällen (Temperatur, pH-Wert) können andere Harze zum Einsatz kommen. Durch Beimengung von bestimmten Additiven zu den polymeren Ausgangsmaterialien und/oder zu dem Harz können die mechanischen und physikalisch-chemischen Eigenschaften des Schlauchlining-Aufbaus beeinflusst werden.

Der getränkte Schlauchlining-Aufbau wird über vorhandene Schachtöffnungen in den zu sanierenden Kanal eingezogen (*inversiert* oder *eversiert*). Nach der Tränkung wird bei der Inversion die Anfangsöffnung des Schlauchlining-Aufbaus über einen Rahmen auf einem 2-3 m hohen Gerüst über dem Anfangsschacht gespannt. Dabei wird der Schlauchlining-Aufbau "umgekrempelt" und beispielsweise mit Wasser befüllt. Dadurch zieht (krempelt) sich der Schlauchlining-Aufbau selbst in den Kanal. Vorteil dabei ist, dass die Reibung gegenüber dem Altrohr vernachlässigt werden kann, der nachrutschende Schlauchlining-Aufbau gleitet durch das Wasser und legt sich formschlüssig an das Altrohr an. Das Harz reagiert (härtet) durch Zugabe von Energie (Warmwasser) in einer exothermen Reaktion und es entsteht ein Rohr im Rohr.

Bei der Eversion wird der Schlauchlining-Aufbau beispielsweise mittels einer Seilwinde in den zu sanierenden Kanal eingezogen und dann mit Druckluft aufgeblasen. Die Reaktion des Harzes kann mit Dampf oder UV- Licht angeregt und unterstützt werden. Vorteile dieser Verfahren sind die kurze Aushärtungszeit und ein geringerer Energiebedarf, da das Aufheizen des gesamten Wasservolumens im Schlauchlining-Aufbau entfällt. Auch muss das mit Harzbestandteilen verunreinigte Wasser nicht eigens entsorgt werden. Nachteilig ist die geringere Bandbreite der Einsatzmöglichkeiten, die Sanierung von Leitungen im Grundwasser oder bei Dükern ist oft nicht möglich. Zudem liegt die praktikable Grenze für derartige Einzugsverfahren derzeit etwa oberhalb von DN 900 beziehungsweise oberhalb einer Wanddicke von ungefähr 14 mm. Es können größere Durchmesser hergestellt werden, die Verfahrenstechnik sowie die im Standardschacht herrschende Enge stellen die Kanalarbeiter jedoch vor größere technische und körperliche Herausforderungen.

Der Schlauchlining-Aufbau muss einige Zeit aushärten (je nach Durchmesser und Länge zwischen 2 Stunden und mehreren Tagen) bevor der Kanal wieder in Betrieb gehen kann. Er hat danach eine von der Statik abhängige Wanddicke von mindestens 3 mm bis 12 mm (oder mehr, je nach Nennweite). Anschließend können gegebenenfalls vorhandene Hausanschlüsse mittels Kanalroboter aufgefräst und darauffolgend mittels so genannter Hutprofile mit dem sanierten Kanal verbunden werden.

Ein Schlauchlining-Aufbau kann als statisch tragendes Rohr im Rohr verwendet werden. Hierzu muss der Schlauchlining-Aufbau die Anforderungen des ATV Merkblattes 127-2 erfüllen und statisch bemessen werden. Gemäß dem Deutschen Institut für Bautechnik (DIBt) muss das Material in diesem Fall eine Ringsteifigkeit von min. 5.000 N/m$^2$ aufweisen.

Die Verfahrenstechnik zur Aushärtung eines Schlauchlining-Aufbaus unterteilt sich im Stand der Technik in vier Hauptgruppen:

1. Inversion oder Eversion des Schlauchlining-Aufbaus mittels Wasserdruck und Aushärtung mittels Warmwasser.
2. Inversion oder Eversion des Schlauchlining-Aufbaus mittels Luftdruck und Aushärtung mittels Dampf.
3. Einzug des Schlauchlining-Aufbaus mittels Seilwinde, Aufstellen und Verdichten mittels Luftdruck und Aushärtung mittels UV-empfindlichen Photoinitiatoren.
4. Kombination des Einzugs- und Inversionsverfahrens und Aushärtung mittels Warmwasser.

Bei der Inversion wird der Schlauchlining-Aufbau durch Umkrempeln von der Innen- auf die Außenseite mithilfe von Wasser- oder Luftdruck in die zu sanierende Haltung gebracht - ähnlich dem Stülpen einer Socke von links auf rechts. Dazu muss je nach Sohltiefe der Haltung oberhalb des Startschachts ein Turm aufgebaut werden um den Wasserdruck auf die örtlichen- und Systembedingungen abzustimmen. Bei der Inversion mithilfe von Druckluft wird der Schlauchlining-Aufbau über eine Trommel in die Haltung gebracht. Der Schlauchlining-Aufbau wird dazu vollständig in einer druckdichten Trommel aufgerollt und anschließend mithilfe von Druckluft invertiert.

Grundsätzlich sind die meisten der verwendeten Schlauchlining-Aufbauten in der Lage, unter Umgebungstemperatur auszuhärten. Man erzielt jedoch höhere Reaktionsumsätze bei der Bildung der Harzmatrix, wenn die Reaktion der Harze durch Temperatur initiiert bzw. gefördert wird.

Zunehmender Beliebtheit erfreuen sich zudem die auf UV-VIS empfindlichen Photoinitiatoren basierenden Systeme. Hierbei versteht der Fachmann gemäß einer Definition des Deutschen Bundesamtes für Strahlenschutz unter dem Begriff ultraviolette (UV-) Strahlung, diejenige, welche einen Wellenlängenbereich von 100 nm bis 400 nm umfasst. Das für den Menschen sichtbare Licht wird mit "VIS" bezeichnet und umfasst für die Zwecke der vorliegenden Erfindung einen Wellenlängenbereich von 380 nm bis 780 nm.

Diese Systeme setzen die Reaktion im Zuge der Bestrahlung durch Bildung chemischer Radikale in Gang. Hierbei werden durch Initiierung infolge UV-Bestrahlung Radikale gebildet (durch Zerfall des Photoinitiators) und die Reaktion ermöglicht. Zur Initiierung der Aushärtung wird mittels eines Kanalroboters ein UV-Lampenzug durch den in dem zu sanierenden Kanal aufgeblasenen Schlauchlining-Aufbau bewegt, wobei die UV-Strahlung durch die Schlauchinnenfolie an das auszuhärtende Harz des Schlauchlining-Aufbaus gelangt und dessen Aushärtung anregt. Die UV-Strahlung muss dabei genau auf das Harzsystem abgestimmt sein.

Bei der UV-initiierten Reaktion wird der Aushärtevorgang über Temperatursensoren an dem UV-Lampenzug kontrolliert. Die Temperaturen werden dem Operator, der den UV-Lampenzug steuert, übermittelt. Dieser kann dann die Fahrgeschwindigkeit des UV-Lampenzuges korrigieren.

Zum Schluss muss bei der herkömmlichen grabenlosen Kanalsanierung die Schlauchinnenfolie des Schlauchlining-Aufbaus abgezogen und entfernt werden, da die Schlauchinnenfolie als innenliegende Schicht den durch das Rohr zu leitenden Substanzen exponiert ist und herkömmliche Schlauchinnenfolien häufig diesen mechanischen Belastungen nicht Stand halten können. Die mangelnde mechanische Robustheit und insbesondere die mangelnde Abriebbeständigkeit herkömmlicher Schlauchinnenfolien führt dazu, dass sich Teile der Schlauchinnenfolie ungewollt ablösen können, welche dann beispielsweise Pumpen, Siebe und Rohre verstopfen oder allgemein die Umweltbelastung erhöhen.

Die Schlauchinnenfolie eines Schlauchlining-Aufbaus muss dagegen eine sehr gute Durchlässigkeit gegenüber UV-Strahlung und kürzerwelliger Strahlung sichtbaren Lichts aufweisen. Damit wird der Aushärtungsvorgang ermöglicht, der beim im Rohr aufgeblasenen Schlauchlining-Aufbau durch eine UV-Lichtquelle vorgenommen wird, die an der Innenseite des Schlauchlining-Aufbaus, also innerhalb der Schlauchinnenfolie, hindurchgezogen wird.

Eine Mehrschichtfolie, die als Schlauchinnenfolie bei der grabenlosen Kanalsanierung eingesetzt werden kann, ist dem Fachmann beispielsweise aus der EP 0 342 897 A2 bekannt. Die EP 0 342 897 A2 offenbart eine Mehrschichtfolie, die eine Polyamid-Schicht als eine erste und eine Ionomer-Siegelschicht als eine zweite Oberflächenschicht aufweist. Wird diese mehrschichtige Folie zur Rohrsanierung eingesetzt, so wird die Polyamid-Schicht durch Erwärmen mit einem faserartigen Vlies verbunden und dieses dann mit einem aushärtbaren Harz getränkt. Nach Konditionierung der Folie, d.h. Quellen der Folie in Wasser bis zur Gewichtskonstanz, wird diese im Anschluss auf ihrer mit Harz getränkten Oberfläche in den zu sanierenden Bereich der Innenwand des Rohres über den gesamten Umfang des Rohres in diesem Bereich eingebracht. Nach Aushärtung des Harzes mittels UV-Strahlung wird in diesem Bereich ein stabiles Rohr an der zu sanierenden Innenwand des Rohres erhalten.

An die Schlauchinnenfolien eines Schlauchlining-Aufbaus bzw. an eine zur Rohrsanierung eingesetzte Mehrschichtfolie, wie z.B. an eine gemäß EP 0 342 897 A2 offenbarte mehrschichtige Folie, werden hohe mechanische Anforderungen gestellt, damit diese den bei ihrer Handhabung auftretenden Belastungen, die z.B. beim Einbringen in das zu sanierende Rohr, beim Aufblasen der jeweiligen Folie im Rohr oder - nach erfolgreicher Sanierung - beim Entfernen aus dem Rohr, auftreten, standhalten.

Nachteilig an einer gemäß EP 0 342 897 A2 offenbarten mehrschichtigen Folie ist, dass diese zumindest im Bereich der Siegelnaht eine Schwachstelle aufweist, bzw. bei herkömmlichen Schlauchfolien, die als innenliegende Schläuche eines Schlauchlining-Aufbaus bei der Rohrsanierung eingesetzt werden, dass diese die erforderlichen mechanischen Eigenschaften nicht aufweisen, um den vorstehend beschriebenen Belastungen standzuhalten. Zudem verkompliziert die Notwendigkeit des Konditionierungsschritts vor der Verwendung der Mehrschichtfolie die Verfahrenstechnik der Kanalsanierung unnötig.

Nachteilig ist auch die zu geringe Abriebbeständigkeit herkömmlicher Schlauchinnenfolien was zur Folge hat, dass diese Schlauchinnenfolien nicht in dem sanierten Kanalabschnitt verbleiben können, sondern entfernt werden müssen, was zusätzlichen Arbeitsaufwand, Zeitaufwand und Kosten verursacht.

Weiterhin nachteilig bei herkömmlichen, als Schlauchinnenfolien verwendeten, Mehrschichtfolien ist unter anderem deren geringe mechanische Dehnbarkeit, besonders bei Temperaturen unter 0°C. Im schlimmsten Fall führt ungenügende mechanische Dehnbarkeit der Schlauchinnenfolie zu einem Platzen der Folie, wenn der Schlauchlining-Aufbau aufgeblasen wird.

In der DE 10 2010 023 764 A1 ist beispielsweise eine Schlauchinnenfolie offenbart, die zwar bei höheren Temperaturen eine akzeptable Dehnbarkeit von durchschnittlich 40% aufweist, für Temperaturen unter 0°C jedoch nicht geeignet ist. Dies schränkt die effiziente Verwendung der in der DE 10 2010 023 764 A1 offenbarten Mehrschichtfolie zur grabenlosen Kanalsanierung auf wärmere Jahreszeiten bzw. wärmere Länder ein. Die in der DE 10 2010 023 764 A1 offenbarte Mehrschichtfolie weist eine Schichtfolge von einer Schicht (a) basierend auf wenigstens einem thermoplastischen Olefin- Homo- oder Copolymeren als eine der Außenschichten, einer Haftvermittlerschicht (b), einer innenliegenden Schicht (c) basierend auf wenigstens einem Homo- oder Copolyamid, einer Haftvermittlerschicht (d) und einer Schicht (e) basierend auf wenigstens einem Homo- und / oder Copolyamid als eine der Außenschichten auf. Somit benötigt die in der DE 10 2010 023 764 A1 offenbarte Mehrschichtfolie zwingend mindestens fünf Schichten, umfassend mindestens zwei Polyamidschichten (c, e) und ist daher in der Herstellung relativ teuer und aufwändig.

Die Schlauchinnenfolien müssen daher bezüglich ihrer mechanischen Eigenschaften wie Reißfestigkeit, Reißkraft, Dehnbarkeit, Elastizität, Spleißneigung, Schlagzähigkeit, Durchstoßfestigkeit und Abriebsfestigkeit höchste Anforderungen erfüllen.

Gegebenenfalls kann bei herkömmlichen Folien, die wenigstens eine Schicht basierend auf einem Polyamid aufweisen, durch Konditionierung eine Verbesserung der mechanischen Eigenschaften erreicht werden. Konditionierung bezeichnet hierbei die reversible Aufnahme von Feuchtigkeit, vorzugsweise von Wasser, durch eine Schicht der Mehrschichtfolie oder durch die Mehrschichtfolie bis hin zur Gewichtskonstanz.

Als besonders elastische und dehnbare Folien aus dem Stand der Technik bekannt sind Mehrschichtfolien aus thermoplastischen Polyurethanen (TPU).

Allerdings weisen diese TPU-Folien keine Barriere gegen organische Monomere wie z.B. Styrol und/oder organische Lösungsmittel auf, die aus der Harzschicht eines Schlauchlining- Aufbaus in das Lumen des Schlauchlining-Aufbaus austreten können. Ein solches Austreten organischer Monomere oder Lösungsmittel kann Explosionsgefahr bei der folgenden Aushärtung des Harzes durch UV-Licht darstellen, da sich die bei der Aushärtung explosive Luft-Monomer- und/oder Luft-LösungsmittelGemische bilden können. Diese können sich beispielsweise aufgrund der hohen Temperaturen der eingesetzten UV-Lampen oder statischer Aufladungen entzünden.

Ausgehend von dem in der DE 10 2010 023 764 A1 offenbarten Stand der Technik ist es daher Aufgabe der vorliegenden Erfindung, eine Mehrschichtfolie zur grabenlosen Kanalsanierung zur Verfügung zu stellen, welche den hohen Anforderungen hinsichtlich der Elastizität und Dehnbarkeit einer Schlauchinnenfolie auch bei Temperaturen unter 0°C genügt, aber dennoch eine zuverlässige Barriere gegen organische Monomere und Lösungsmittel bietet, wobei die Mehrschichtfolie gegebenenfalls im sanierten Kanal verbleiben kann.

Diese Aufgabe wird gelöst durch eine Mehrschichtfolie gemäß Anspruch 1, die Verwendung gemäß Anspruch 7 den Schlauchlining-Aufbau nach Anspruch 8 und den sanierten Kanalabschnitt nach Anspruch 10.

Vorteilhafte Abwandlungen und Weiterbildungen der vorliegenden Erfindung sind Gegenstand der Unteransprüche.

Insbesondere betrifft die vorliegende Erfindung eine Mehrschichtfolie, die mindestens eine Polyamid (PA)-Schicht und mindestens eine weitere Schicht aus einem anderen Polymermaterial umfasst und für elektromagnetische Strahlung in einem Wellenlängenbereich von 150 bis 600 nm zumindest teilweise durchlässig ist und für organische volatile Substanzen mit einer Molekularmasse von 20 bis 300 gmol$^{-1}$ wie z.B. organische Monomere (beispielsweise Styrol, Divinylbenzol, Ethen, Ethin, Propylen) und Lösungsmittel, z.B. Toluol, Ethanol, Aceton undurchlässig ist und einen Zugelastizitätsmodul (E-Modul) von 1 bis 250 MPa oder 1 bis 500 MPa oder 1 bis 1000 MPa aufweist, gemessen nach DIN EN ISO 527- 1-3 mit einer Prüfgeschwindigkeit von 300 mm/min in Maschinenrichtung (MD) und Querrichtung (TD), nach 24-stündiger Konditionierung bei 23°C und einer relativen Luftfeuchtigkeit von 50%.

Zwar ist eine ähnliche Mehrschichtfolie aus dem Stand der Technik der DE 10 2010 023 764 A1 bekannt, jedoch ist es der Verdienst der Erfinder der vorliegenden Anmeldung, erkannt zu haben, dass ein E-Modul im Bereich 1-250 MPa entscheidend für die Anwendung und Verwendung der vorliegenden Erfindung für die grabenlose Kanalsanierung ist. Nur solche Mehrschichtfolien, die in dem genannten E-Modulbereich liegen, zeigen die zur Kanalsanierung, insbesondere bei Temperaturen unter 0°C, erforderlichen mechanischen Eigenschaften wie Dehnbarkeit, Zugfestigkeit und Abriebbeständigkeit.

Im Gegensatz zu der aus der DE 10 2010 023 764 A1 bekannten Mehrschichtfolie benötigt die erfindungsgemäße Mehrschichtfolie nicht zwingend zwei Polyamidschichten und kann zudem insgesamt weniger als fünf Schichten aufweisen, bietet aber dennoch vorteilhafte mechanische Eigenschaften wie einen geringen E-Modul und eine hohe Dehnbarkeit auch bei Temperaturen unter 0°C, sowie zuverlässigen Schutz vor austretenden organischen Monomeren und Lösungsmitteln.

Daher ermöglicht die erfindungsgemäße Mehrschichtfolie gegenüber dem aus der DE 10 2010 023 764 A1 bekannten Stand der Technik nicht nur eine beschleunigte und verbilligte Herstellung der Mehrschichtfolie, sondern zudem auch eine nicht durch Witterungsverhältnisse oder Temperaturbereiche eingeschränkte Anwendbarkeit der Mehrschichtfolie, beispielsweise als Schlauchinnenfolie bei der grabenlosen Kanalsanierung.

Die hohe Durchlässigkeit für UV-Strahlung der Mehrschichtfolie (vorzugsweise 80%, besonders bevorzugt 90%) ermöglicht eine effektive Aushärtung des Harzes bei Verwendung der Mehrschichtfolie im Rahmen eines Schlauchlining-Aufbaus, der mittels Luftdruck aufgestellt und verdichtet und dann mittels UV-empfindlichen Photoinitiatoren ausgehärtet wird.

Die Barrierefunktion der erfindungsgemäßen Mehrschichtfolie gegenüber organischen Monomeren und Lösungsmitteln ist äußerst wichtig, da aus der Harzschicht in das Lumen des Schlauchlining-Aufbaus austretende organische Monomere und/oder Lösungsmittel mit der Luft ein leicht entzündliches Gemisch bilden können, was aufgrund der hohen Temperaturen bei der Aushärtung mittels UV-Licht zu Explosionsgefahr führen kann. Im Gegensatz zu herkömmlichen Mehrschichtfolien auf TPU-Basis, die zwar ähnliche Elastizitäts- und Zugeigenschaften aufweisen, bietet die erfindungsgemäße Mehrschichtfolie zuverlässigen Schutz vor austretenden volatilen Substanzen wie organischen Lösungsmitteln und Monomeren bei gleichbleibend vorteilhaften, wenn nicht besseren, Elastizitäts- und Zugeigenschaften.

Diese vorteilhaften Elastizitäts- und Zugeigenschaften sind in dem niedrigen E-Modul der erfindungsgemäßen Folie abgebildet. Ein geringer Zugelastizitätsmodul (E-Modul) von 1 bis 250 MPa ist ein Charakteristikum einer weichen, elastischen Folie.

Eine hohe Elastizität und somit Dehnbarkeit der erfindungsgemäßen Mehrschichtfolie verringert die Gefahr des Platzens oder Spleißens (Aufreißen einer innenliegenden Folienschicht), wenn die Folie gedehnt wird z.B. während des Aufblasens oder bereits des Einziehens in einen zu sanierenden Kanal. Diese vorteilhaften mechanischen Eigenschaften weist die erfindungsgemäße Mehrschichtfolie auch bei Temperaturen unter 0°C auf, was die Verwendung der erfindungsgemäßen Mehrschichtfolie als Schlauchinnenfolie eines Schlauchlining-Aufbaus zur grabenlosen Kanalsanierung auch im mitteleuropäischen Winter ermöglicht. Auch ist die erfindungsgemäße Folie besonders abriebsfest.

Zwar weist auch die in der DE 10 2010 023 764 A1 offenbarte Mehrschichtfolie wie die meisten herkömmlichen Folien bei 20°C eine Dehnbarkeit von 40% bis zum Bruch auf.

Jedoch haben die Erfinder dieser bekannten Mehrschichtfolie - wie oben erläutert - die Bedeutung des E-Moduls für die Anwendbarkeit der Mehrschichtfolie zur grabenlosen Kanalsanierung bei tieferen Temperaturen, insbesondere unter 0°C, nicht erkannt.

Die Einstellung des E-Moduls der Mehrschichtfolie gemäß Anspruch 1 auf einen Bereich zwischen 1 bis 250 MPa gewährleistet, dass die erfindungsgemäße Mehrschichtfolie auch bei Temperaturen unter 0°C, insbesondere im Temperaturbereich von -80°C bis 0°C, vorzugsweise -40°C bis 0°C, bevorzugt -20°C bis 0°C eine Dehnbarkeit im Aufblastest bis zum Platzen zwischen 80 und 1000%, insbesondere 80 bis 400%, bevorzugt 80 bis 200% aufweist, wobei die maximale Dehnbarkeit in % sich berechnet aus [(Schlauchdurchmesser nach dem Aufblasen/anfänglicher Schlauchdurchmesser vor dem Aufblasen) - 1] x 100 . Diesen Zusammenhang zwischen E-Modul einer Mehrschichtfolie und deren Dehnbarkeit bei Temperaturen unter 0°C haben die Erfinder der Mehrschichtfolie gemäß DE 10 2010 023 764 A1 nicht erkannt. Messungen mechanischer Eigenschaften wie des E-Moduls oder der Dehnbarkeit bis zum Platzen bei Temperaturen unter 0°C wurden nicht durchgeführt und sind in der DE 10 2010 023 764 A1 weder offenbart, noch implizit enthalten.

Es ist bevorzugt, dass in der Mehrschichtfolie der vorliegenden Erfindung mindestens ein Polyamid der mindestens einen Polyamidschicht einen Zugelastizitätsmodul von 1 bis 500 MPa aufweist, gemessen nach DIN EN ISO 527- 1-3 mit einer Prüfgeschwindigkeit von 300 mm/min in Maschinenrichtung (MD) und Querrichtung (TD), nach 24-stündiger Konditionierung bei 23°C und einer relativen Luftfeuchtigkeit von 50%.

Dies ist überraschenderweise ausreichend, um der gesamten Mehrschichtfolie die gewünschte Weichheit, Dehnbarkeit und Abriebfestigkeit zu verleihen.

Durch den geringen E-Modul der erfindungsgemäßen Mehrschichtfolie erhöht sich überraschend insbesondere auch deren Abriebbeständigkeit, da die Mehrschichtfolie elastisch federnd nachgibt, wenn z.B. Quarzkieskörner auf die Oberfläche der Mehrschichtfolie auftreffen, wodurch die die Mehrschichtfolie erodierenden Oberflächenkräfte verringert werden. Aufgrund der hohen Abriebbeständigkeit der erfindungsgemäßen Mehrschichtfolie kann diese bei Verwendung der Mehrschichtfolie als Schlauchinnenfolie eines Schlauchlining-Aufbaus im Gegensatz zu den Schlauchinnenfolien des Stands der Technik nach der grabenlosen Kanalsanierung in dem sanierten Kanalabschnitt verbleiben, was die Verfahrenstechnik der grabenlosen Kanalsanierung vereinfacht, beschleunigt und deren Kosten reduziert.

Zwar nehmen auch die Erfinder der DE 10 2010 023 764 A1 für sich in Anspruch, dass die offenbarte Mehrschichtfolie in dem sanierten Kanal verbleiben kann, allerdings sind in der DE 10 2010 023 764 A1 keinerlei Messdaten zur Abriebbeständigkeit der Mehrschichtfolie offenbart, da die Erfinder auch den Zusammenhang zwischen E-Modul und Abriebbeständigkeit nicht erkannt haben. Somit ist fraglich, ob die in der DE 10 2010 023 764 A1 offenbarte Mehrschichtfolie als Schlauchinnenfolie den mechanischen Belastungen an der lumenseitigen Wand des sanierten Kanals langfristig Stand halten könnte, ohne dass sich zumindest Teile der Folie von der lumenseitigen Wand eines in einen Kanal eingebrachten Schlauchlining-Aufbaus ablösen.

Entscheidend für die Anwendbarkeit der erfindungsgemäßen Mehrschichtfolie auch bei Temperaturen unter 0°C ist die bewusste Einstellung des E-Moduls der Mehrschichtfolie in einem Bereich 1 bis 250 MPa. Durch Einstellung und Variieren des Zugelastizitätsmoduls innerhalb dieses Bereichs von 1 bis 250 MPa können die mechanischen Eigenschaften der Mehrschichtfolie auf spezielle Anforderungen zugeschnitten werden. Bevorzugte Ausführungsformen der erfindungsgemäßen Mehrschichtfolie weisen je nach den spezifischen Erfordernissen der jeweiligen Anwendung jeweils einen Zugelastizitätsmodul im Bereich von 10 bis 200 MPa, bevorzugt von 20 bis 180 MPa, vorzugsweise von 30 bis 180 MPa, besonders bevorzugt von 50 bis 150 MPa auf.

Zudem kann die Zusammensetzung der weiteren Polymerschicht(en) variiert und an jeweils spezifische Erfordernisse und Anwendungen angepasst werden. In einer weiteren bevorzugten Ausführungsform der Erfindung kann die weitere Polymerschicht aus einem anderen Polymermaterial eine Ausgangssubstanz enthalten, welche ausgewählt ist aus der Gruppe, bestehend aus: Ethylen-(Meth) Acrylat-Copolymer, thermoplastisches Olefin- Homo- oder Copolymer, Ethylen-Homopolymer (Polyethylen, PE), Polyethylen niedriger Dichte (LDPE), LLDPE (Linear low density polyethylene), Polyethylen hoher Dichte (HDPE), auf Basis von Metallocen-Katalysatoren polymerisiertes PE (mPE), Polypropylen-Homopolymere (Polypropylen, PP), Polypropylen-Randomcopolymere (Polypropylen, random PP), Butylen-Homopolymere (Polybutylen, PB), Isobutylen-Homopolymere (Polyisobutylen, PI), Ethylen-Vinylalkohol-Copolymer (EVOH), Polyvinylalkohol (PVOH), zyklisches Olefin-Copolymer (COC), thermoplastische Elastomere (TPE), insbesondere auf Basis von PA Elastomeren, bevorzugt PA 12 Elastomeren, Blockcopolymeren aus PA12-Segmenten und Polyethersegmenten oder auf Urethanbasis (TPU) und einer Kombination zweier oder mehrerer der genannten Ausgangssubstanzen.

Wenn erforderlich, können zwischen einzelnen Polymerschichten der Mehrschichtfolie auch Haftvermittlerschichten vorgesehen sein. Zudem kann die Mehrschichtfolie auch bepudert werden, um die Gleitfähigkeit der Mehrschichtfolie zu verbessern.

Weiterhin können durch Zugabe verschiedener Additive zu den Ausgangssubstanzen einer oder mehrerer Schichten die Eigenschaften der Mehrschichtfolie variiert werden. So enthält z.B. in einer weiteren Ausführungsform der vorliegenden Erfindung wenigstens eine der Schichten der Mehrschichtfolie wenigstens ein Additiv, welches ausgewählt ist aus der Gruppe, bestehend aus: Antistatika, Antioxidantien, Oxygen Scavengers, Antiblockmittel, Antifogmittel, antimikrobiellen Wirkstoffen, Farbstoffen, Farbpigmenten, Stabilisierungsmittel, vorzugsweise Hitzestabilisatoren, Prozess-Stabilisatoren, Prozesshilfsmittel, Flammschutzmittel, Nukleierungsmittel, Kristallisationsmittel, vorzugsweise Kristallkeimbildner, Gleitmittel, optische Aufheller, Flexibilisierungsmittel, Siegelmittel, Weichmacher, Silane, Abstandshalter, Füllstoffe, Peel-Additive, Wachse, Benetzungsmittel, oberflächenaktive Verbindungen, vorzugsweise Tenside, UV-Stabilisatoren und Dispergiermittel.

Vorzugsweise ist die erfindungsgemäße Mehrschichtfolie als Schlauch, insbesondere als Schlauchinnenfolie eines Schlauchlining-Aufbaus zur grabenlosen Kanalsanierung, ausgebildet.

Bevorzugt wird der Schlauch hierbei durch (Co)-Extrusion, besonders bevorzugt durch Blasfolien- (Co)- Extrusion und vorzugsweise ohne Siegelnaht hergestellt.

Schlauchfolien ohne Siegelnaht sind hierbei besonders robust und bieten weniger Schwachstellen als Schlauchfolien, die durch Versiegeln einer Flachfolie ausgebildet wurden. Alternativ kann die erfindungsgemäße Mehrschichtfolie in Form einer Schlauchfolie als Cast-Folie durch Cast-(Co)-Extrusion erhalten werden oder als sonstige Flachfolie. Solche Folien können dann zu einem Schlauch versiegelt werden. Eine Prägung, Reckung, und/oder Bedruckung der erfindungsgemäßen Mehrschichtfolie kann vorteilhaft sein.

An einem aus der Mehrschichtfolie gebildeten Schlauch wird die Dehnbarkeit der Mehrschichtfolie gemessen. Erfindungsgemäß weist die Mehrschichtfolie hierbei in radialer Richtung bei -1 °C eine maximale Dehnbarkeit von mindestens 10%, bevorzugt ca. 15%, vorzugsweise ca. 20% bis zum Spleiß, d.h. einem ersten Abriss einer innenliegenden Folienschicht auf. Erfindungsgemäß weist die Mehrschichtfolie in radialer Richtung bei 20°C eine maximale Dehnbarkeit von mindestens 20%, bevorzugt ca. 25%, vorzugsweise ca. 30% bis zum Spleiß, d.h. einem ersten Abriss einer innenliegenden Folienschicht auf. Die Dehnbarkeit bis zum Platzen beträgt - sowohl bei geringen Temperaturen (unter 0°C) als auch bei höheren Temperaturen (zum Beispiel 20°C) vorzugsweise mindestens 80%, bevorzugt mindestens 100%, besonders bevorzugt mindestens 110%, und am meisten bevorzugt mindestens 120% und sogar mindestens 130%.

In einer weiteren bevorzugten Ausführungsform weist die erfindungsgemäße Mehrschichtfolie eine Abriebtiefe gemäß DIN EN 295-3 (Darmstädter Kipprinne, Mindestlastspielanzahl 100.000) vorzugsweise in einem Bereich zwischen 0,001 und 0,03 mm, besonders bevorzugt zwischen 0,003 und 0,02 mm auf.

Aufgrund der hohen Abriebbeständigkeit der erfindungsgemäßen Mehrschichtfolie kann diese bei Verwendung der Mehrschichtfolie als Schlauchinnenfolie eines Schlauchlining-Aufbaus nach der grabenlosen Kanalsanierung in dem sanierten Kanalabschnitt verbleiben, was die Verfahrenstechnik der grabenlosen Kanalsanierung vereinfacht.

In einer bevorzugten Ausführungsform der vorliegenden Erfindung enthält die Polyamidschicht der Mehrschichtfolie ein Homo- oder Copolyamid, welches ausgewählt ist aus der Gruppe bestehend aus: thermoplastischen aliphatischen, teilaromatischen oder aromatischen Homo- oder Copolyamiden, insbesondere PA6, PA12, PA66, PA10, PA 11, PA 666, PA6I, PA 6,12, PA6T, PA-Elastomere, Terpolyamiden, Quaterpolyamiden, Blockcopolymeren aus PA12-Segmenten und Polyethersegmenten oder einer Mischung aus mindestens zwei der genannten Polyamide.

Die Polyamidschicht dient als Barriere gegen organische Lösungsmittel und/ oder Monomere, die aus dem Harz in das Lumen des Schlauchlining-Aufbaus austreten und zu Explosionsgefahr führen können.

Zur Herstellung der Barriereschicht können alternativ auch wenigstens EthylenVinylalkohol-Copolymer (EVOH), Polyvinylalkohol (PVOH), zyklisches Olefin-Copolymer (COC), Polyvinylidenchlorid (PVdC) oder eine Mischung aus wenigstens zwei der genannten Polymere oder eine Mischung eines Homo- oder Copolyamids mit einem der genannten Polymere verwendet werden. Vorzugsweise werden bei der Herstellung der erfindungsgemäßen Mehrschichtfolie besonders weiche Polyamide mit geringem Zugelastizitätsmodul verwendet. Dies bringt z.B. gegenüber herkömmlichen elastischen und dehnbaren Schlauchinnenfolien auf TPU- Basis den Vorteil mit sich, dass eine Folie mit besseren mechanischen Eigenschaften wie Elastizität und Dehnbarkeit sowie mit einer Barrierefunktion gegen organische Monomere und/oder Lösungsmittel geschaffen wird.

Zur Anpassung der mechanischen Eigenschaften der Mehrschichtfolie an die jeweiligen Anforderungen kann die Polyamidschicht beispielsweise mittels (bevorzugt lebensmitteltauglichen) Weichmachern zusätzlich weichgemacht werden, sodass auch trinkwasserführende Rohre saniert werden können.

In einer weiteren bevorzugten Ausführungsform variiert die Gesamtdicke der Mehrschichtfolie im Bereich von 10 bis 4000 $\mu$m, vorzugsweise von 40 bis 2000 $\mu$m, besonders bevorzugt von 60 bis 1000 $\mu$m, insbesondere von 80 bis 400 $\mu$m. Dies erlaubt eine Anpassung der Mehrschichtfolie an die Größe bzw. den Kanaltyp des zu sanierenden Kanals und ermöglicht gegebenenfalls eine Reduktion der Herstellungskosten durch Verwendung der jeweils dünnstmöglichen Mehrschichtfolie für eine jeweilige Anwendung.

In verschieden Ausführungsformen variiert die Schichtdicke der Polyamidschicht zwischen 1 $\mu$m bis 200 $\mu$m, vorzugsweise zwischen 5 und 100 $\mu$m, besonders bevorzugt zwischen 20 $\mu$m und 80 $\mu$m. Durch Variieren der Schichtdicke und Zusammensetzung der Polyamidschicht kann der E-Modul der gesamten Mehrschichtfolie gesteuert werden. Zudem können durch Verwendung dünnerer Polyamidschichten die Herstellungskosten der Mehrschichtfolie reduziert werden.

Eine Verwendung einer erfindungsgemäßen Mehrschichtfolie als Schlauchinnenfolie bei der grabenlosen Kanalsanierung ist besonders vorteilhaft, da die hohe Elastizität und Weichheit (niedriger Zugelastizitätsmodul) und große Dehnbarkeit der erfindungsgemäßen Mehrschichtfolie ein Spleißen oder gar Platzen der Mehrschichtfolie beim Aufblasen der Mehrschichtfolie in dem zu sanierenden Kanal verhindert. Im Gegensatz zu herkömmlichen Schlauchinnenfolien ist die vorteilhafte hohe Dehnbarkeit der erfindungsgemäßen Mehrschichtfolie auch bei Temperaturen unter 0°C gewährleistet, was Sanierungsarbeiten im mitteleuropäischen Winter wesentlich vereinfacht. Tests haben ergeben, dass der aus der Mehrschichtfolie gebildete Schlauch in radialer Richtung sogar im Temperaturbereich von -80°C bis 0°C, insbesondere -40°C bis 0°C, bevorzugt -20°C bis 0°C eine Dehnbarkeit im Aufblastest bis zum Platzen zwischen 80 und 1000%, insbesondere 80 bis 400%, bevorzugt 80 bis 200% aufweist, wobei die maximale Dehnbarkeit in % sich berechnet aus [(Schlauchdurchmesser nach dem Aufblasen/anfänglicher Schlauchdurchmesser vor dem Aufblasen) - 1] x 100. In Verbindung mit dieser vorteilhaften hohen Elastizität und Dehnbarkeit weist die erfindungsgemäße Mehrschichtfolie weiterhin eine Barriere gegen organische Monomere und Lösungsmittel auf, die beispielsweise aus dem Harz in das Lumen des zu sanierenden Kanals austreten können. Dies ist eine deutliche Verbesserung gegenüber der aus dem Stand der Technik bekannten TPU-Folien, die zwar ähnliche Elastizitäten und Dehnbarkeiten aufweisen, allerdings keinen Schutz vor austretenden organischen Monomeren und Lösungsmitteln bieten. Weiterhin weist die erfindungsgemäße Mehrschichtfolie eine besonders gute Abriebbeständigkeit auf.

Neben dem Einsatz der Mehrschichtfolie als Schlauchinnenfolie kann diese auch als Gleitfolie, Preliner, Stütz- oder Kalibrierschlauch eines Schlauchlining-Aufbaus bei der grabenlosen Kanalsanierung verwendet werden. Die erfindungsgemäße Mehrschichtfolie kann nicht nur für die Kanalsanierung mittels der beschriebenen UV-Härtung bzw. Härtung mit kurzwelligem sichtbarem Licht eingesetzt werden, sondern auch in Rohrsanierungssystemen, in denen der Schlauchlining-Aufbau (die erfindungsgemäße Mehrschichtfolie umfassend) thermisch gehärtet wird oder auch das Inversionsverfahren angewendet wird. Auch kann die erfindungsgemäße Mehrschichtfolie in Form eines Preliners oder einer Stütz- und/oder Kalibrierfolie eingesetzt werden.

Als Preliner ist im Sinne dieser Erfindung eine Folie, vorzugsweise in Form eines Folienschlauchs oder zu einem Schlauch gesiegelte Flachfolie, zu verstehen, die zwischen der Kanalwand des zu sanierenden Kanals und dem Schlauchlining-Aufbau eingebracht wird. Dabei erfüllt die Folie als Preliner eine Reihe von Aufgaben, wie zum Beispiel die Verhinderung der Verklebung des Harzes mit der Kanalwand sowie beispielsweise die Vermeidung des Kontakts mit Schmutz und Wasser zu dem noch nicht gehärteten Harz. Ferner verhindert der Preliner auch das Austreten von Harz aus dem Kanalsanierungssystem sowie die Kontamination von Erdreich und Grundwasser. Durch den Preliner werden außerdem die Zuläufe vor eindringendem Überschuss-Harz geschützt, so dass sich keine Harzpfropfen und Verstopfungen bilden können.

Die Verwendung der erfindungsgemäßen Mehrschichtfolie als Preliner ist auch ähnlich einer Funktion als Gleitfolie für den einzuziehenden Schlauchlining-Aufbau. Eine erfindungsgemäße Verwendung der beschriebenen Mehrschichtfolie betrifft daher auch eine Verwendung als schlauchförmige Gleitfolie beim Schlauchlining-Verfahren im Zuge der grabenlosen Kanalsanierung. In diesem Fall kommt es auf niedrige Reibungskoeffizienten zwischen der Gleitfolie und der Außenfolie des Schlauchlining-Aufbaus an.

Ein Kalibrierschlauch entspricht in seiner Funktion im Wesentlichen der Schlauchinnenfolie beim System UV-/Licht-härtender Glasfaser-Schlauchlining-Aufbau und ist bei einem Schlauchlining-Aufbau ebenso angeordnet wie die Schlauchinnenfolie. Oft ist ein Kalibrierschlauch an seiner Schlauchaußenseite (also beim Einsatz hin zur Kanalwand) mit einem Vlies oder Filz verbunden. Wenn ein Kalibrierschlauch verwendet wird, kann auf eine Schlauchinnenfolie verzichtet werden. Hierbei kann beim Einsatz der erfindungsgemäßen Folie als Kalibrierschlauch auch auf beiden Seiten Harz aufgetragen sein. Vorzugsweise wird das Harz in Form eines mit Harz getränkten Trägers, beispielsweise Glasfasern oder Synthesefaserfilze, mit der Folie in Kontakt gebracht. Die aktivierbare(n) Schicht(en) der erfindungsgemäßen Folie verbindet (verbinden) sich dann mit dem Harz oder mit einem harzgetränkten Trägermaterial (wie Vlies, Filz, oder Textilgewebe etc.). Erhalten wird somit ein Rohr im Rohr.

Vorzugsweise wird als Schlauchinnenfolie, Gleitfolie, Preliner, Stütz- oder Kalibrierschlauch eine Mehrschichtfolie verwendet, die in radialer Richtung bei -1 °C eine Dehnbarkeit bis zum Platzen von mindestens ca. 20%, vorzugsweise größer als ca. 80%, aufweist.

Bevorzugt wird als Schlauchinnenfolie, Gleitfolie, Preliner, Stütz- oder Kalibrierschlauch eine Mehrschichtfolie verwendet, deren Abriebtiefe gemäß DIN EN 295-3 kleiner als 0,03 mm, bevorzugt kleiner 0,02 mm, vorzugsweise kleiner 0,01 mm ist, insbesondere bevorzugt in einem Bereich zwischen 0,001 und 0,03 mm, vorzugsweise zwischen 0,003 und 0,02 mm liegt.

Bevorzugt weist die als Schlauchinnenfolie, Gleitfolie, Preliner, Stütz- oder Kalibrierschlauch verwendete Mehrschichtfolie eine Polyamidschicht auf, die ein Homo- oder Copolyamid enthält, welches ausgewählt ist aus der Gruppe bestehend aus: thermoplastischen aliphatischen, teilaromatischen oder aromatischen Homo- oder Copolyamiden, insbesondere PA6, PA12, PA66, PA10, PA 11, PA 666, PA6I, PA 6,12, PA6T, Polyamid Elastomeren, Terpolyamiden, Quaterpolyamiden, Blockcopolymeren aus PA12-Segmenten und Polyethersegmenten oder einer Mischung aus mindestens zwei der genannten Polyamide.

Bei einer Verwendung der erfindungsgemäßen Mehrschichtfolie kann diese in konditioniertem oder nicht-konditioniertem Zustand eingesetzt werden. Unter Konditionierung wird hierbei die reversible Aufnahme von Feuchtigkeit, vorzugsweise von Wasser, durch ein thermoplastisches Kunststoffmaterial wie Homo- oder Copolyamid oder durch die gesamte Mehrschichtfolie verstanden. Eine Konditionierung beeinflusst die mechanischen Eigenschaften der Mehrschichtfolie.

Ein weiterer Aspekt der vorliegenden Erfindung betrifft einen Schlauchlining-Aufbau zur grabenlosen Kanalsanierung. Ein solcher Schlauchlining-Aufbau umfasst eine erfindungsgemäße Mehrschichtfolie als Schlauchinnenfolie und eine UV-Strahlung und/oder sichtbares Licht absorbierende oder reflektierende, kanalwandseitig liegende ein- oder mehrschichtige Schlauchfolie als außenliegendem Schlauch, wobei zwischen der Schlauchinnenfolie und dem au ßenliegenden Schlauch ein mit einem reaktiven Kunststoffharz getränktes Trägermaterial vorgesehen ist. Ein solcher erfindungsgemäßer Schlauchlining-Aufbau ist besonders sicher, da durch die hohe Elastizität und Dehnbarkeit der Schlauchinnenfolie ein Platzen oder Spleißen der Schlauchinnenfolie beispielsweise beim Aufblasen des Schlauchlining-Aufbaus in einem zu sanierenden Kanal und folglich ein Austreten unausgehärteten Harzes durch Risse in der Schlauchinnenfolie nahezu ausgeschlossen ist. Durch die Barrierefunktion der Polyamidschicht der Schlauchinnenfolie können organische Monomere und Lösungsmittel nicht in das Lumen des Schlauchlining-Aufbaus austreten und sich dort mit der Luft zu einem entzündlichen Gemisch mischen. Da die erfindungsgemäße Mehrschichtfolie auch bei Temperaturen unter 0°C, insbesondere im Temperaturbereich von -80°C bis 0°C, insbesondere -40°C bis 0°C, bevorzugt -20°C bis 0°C sehr vorteilhafte mechanische Eigenschaften (Elastizität, Dehnbarkeit) aufweist, funktioniert der erfindungsgemäße Schlauchlining-Aufbau auch im mitteleuropäischen Winter problemlos. Durch die hohe Abriebbeständigkeit der erfindungsgemäßen Mehrschichtfolie kann diese nach der Aushärtung des Harzes in dem sanierten Kanalabschnitt verbleiben und muss nicht entfernt werden. Dies macht den erfindungsgemäßen Schlauchlining-Aufbau besonders anwenderfreundlich.

Ein anderer Aspekt der vorliegenden Erfindung betrifft einen sanierten Kanalabschnitt mit einem Kanal zum Transport von Flüssigkeiten, Gasen oder Feststoffen und einem erfindungsgemäßen Schlauchlining-Aufbau, welcher derart angeordnet ist, dass er an der zum zu transportierenden Flüssigkeiten, Gas oder Feststoff gerichteten Kanalwand anliegt und bei welchem ein zwischen einem innen liegenden Schlauch und einem kanalwandseitig liegenden Schlauch ein Trägermaterial angeordnet ist, welches ein ausgehärtetes Kunststoffharz aufweist.

In einer Ausführungsform verbleibt eine als Schlauchinnenfolie vorgesehene erfindungsgemäße Mehrschichtfolie in dem sanierten Kanalabschnitt.

Alternativ wird eine als Schlauchinnenfolie vorgesehene erfindungsgemäße Mehrschichtfolie wie bei den herkömmlichen Verfahren zur grabenlosen Kanalsanierung nach der Aushärtung des Harzes aus dem sanierten Kanalabschnitt entfernt.

Die erfindungsgemäße Mehrschichtfolie weist definitionsgemäß zwei oder mehr Schichten auf.

Weitere Vorteile und Merkmale ergeben sich anhand der Beschreibung von Ausführungsbeispielen.

**Beispiele**

Es werden sechs verschiedene erfindungsgemäße Mehrschichtfolien (Beispiele 1 bis 8, B1 bis B8) mit zwei bereits aus dem Stand der Technik bekannten und etablierten Schlauchinnenfolien (Vergleichsbeispiele 1 und 2, V1 und V2) hinsichtlich ihres Schichtaufbaus, ihrer Dehnbarkeit, ihrer mechanischen Eigenschaften und ihrer Abriebbeständigkeit verglichen.

Die Mehrschichtfolien der Vergleichsbeispiele bestehen jeweils aus fünf Schichten. Die erfindungsgemäßen Mehrschichtfolien bestehen jeweils aus fünf (B1 bis B4) oder drei (B5 und B6) Schichten. Die einzelnen Schichten der Mehrschichtfolien grenzen jeweils in der Reihenfolge unmittelbar aneinander an, in der sie nachstehend aufgeführt sind. Sowohl die Mehrschichtfolien der Vergleichsbeispiele V1 und V2 als auch der Beispiele B1 bis B8 wurden durch Blasfolien-Co-Extrusion hergestellt.

**Vergleichsbeispiel 1 (Stand der Technik)**

| Schicht-Nummer | Zusammensetzung | Anteil in Schicht in % | Dicke in μm |
|---|---|---|---|
| (1) | • Copolyamid mittlerer Viskosität, E-Modul 1200 MPa<br>• Homopolyamid hoher Viskosität, E-Modul 2800 MPa | • 88<br>• 12 | 40 |
| (2) | • Haftvermittler | • 100 | 10 |
| (3) | • Polyethylen geringer Dichte (LDPE), E-Modul 260 MPa<br>• Mittels Metallocen-Katalyse hergestelltes Ethylen-Copolymer, E-Modul <330 MPa | • 70<br>• 30 | 65 |
| (4) | • Haftvermittler | • 100 | 10 |
| (5) | • Polyethylen geringer Dichte (LDPE), E-Modul 260 MPa<br>• Mittels Metallocen-Katalyse hergestelltes Ethylen-Copolymer, E-Modul < 330 MPa | • 70<br>• 30 | 75 |
| Gesamte Folie | Gesamt-E-Modul (MD/TD): 325/342 MPa | | Gesamtdicke:<br>200 μm |

**Vergleichsbeispiel 2 (Stand der Technik)**

| Schicht-Nummer | Zusammensetzung | Anteil in Schicht in % | Dicke in μm |
|---|---|---|---|
| (1) | • Copolyamid mittlerer Viskosität, E-Modul 1200 MPa<br>• Homopolyamid hoher Viskosität, E-Modul 2800 MPa | • 88<br>• 12 | 40 |
| (2) | • Haftvermittler | • 100 | 10 |
| (3) | • Polyethylen geringer Dichte (LDPE), E-Modul 260 MPa<br>• Mittels Metallocen-Katalyse hergestelltes Ethylen-Copolymer, E-Modul <330 MPa | • 70<br>• 30 | 25 |
| (4) | • Haftvermittler | • 100 | 10 |
| (5) | • Polyethylen geringer Dichte (LDPE), E-Modul 260 MPa<br>• Mittels Metallocen-Katalyse hergestelltes Ethylen-Copolymer, E-Modul <330 MPa | • 70<br>• 30 | 35 |
| Gesamte Folie | Gesamt- E-Modul (MD/TD): 275/279 MPa | | Gesamtdicke: 120 μm |

**Beispiel 1 (Erfindungsgemäße Mehrschichtfolie)**

| Schicht-Nummer | Zusammensetzung | Anteil in Schicht in % | Dicke in μm |
|---|---|---|---|
| (1) | • Polyamid mit E-Modul < 200 MPa | • 100 | 40 |
| (2) | • Haftvermittler | • 100 | 10 |
| (3) | • Polyethylen geringer Dichte (LDPE), E-Modul 260 MPa<br>• Mittels Metallocen-Katalyse hergestelltes Ethylen-Copolymer, E-Modul <330 MPa | • 70<br>• 30 | 65 |
| (4) | • Haftvermittler | • 100 | 10 |
| (5) | • Polyethylen geringer Dichte (LDPE), E-Modul 260 MPa<br>• Mittels Metallocen-Katalyse hergestelltes Ethylen-Copolymer, E-Modul <330 MPa | • 70<br>• 30 | 75 |
| Gesamte Folie | Gesamt- E-Modul (MD/TD): 175/170 MPa | | Gesamtdicke: 200 μm |

**Beispiel 2 (Erfindungsgemäße Mehrschichtfolie)**

| Schicht-Nummer | Zusammensetzung | Anteil in Schicht in % | Dicke in μm |
|---|---|---|---|
| (1) | • Polyamid mit E-Modul < 200 MPa | • 100 | 40 |
| (2) | • Haftvermittler | • 100 | 10 |
| (3) | • Polyethylen geringer Dichte (LDPE), E-Modul 260 MPa<br>• Mittels Metallocen-Katalyse hergestelltes Ethylen-Copolymer, E-Modul <330 MPa | • 70<br>• 30 | 25 |
| (4) | • Haftvermittler | • 100 | 10 |
| (5) | • Polyethylen geringer Dichte (LDPE), E-Modul 260 MPa<br>• Mittels Metallocen-Katalyse hergestelltes Ethylen-Copolymer, E-Modul <330 MPa | • 70<br>• 30 | 35 |
| Gesamte Folie | Gesamt- E-Modul (MD/TD): 170/173 MPa | | Gesamtdicke: 120 μm |

**Beispiel 3 (Erfindungsgemäße Mehrschichtfolie)**

| Schicht-Nummer | Zusammensetzung | Anteil in Schicht in % | Dicke in μm |
|---|---|---|---|
| (1) | • Polyamid mit E-Modul ca. 450 MPa | • 100 | 40 |
| (2) | • Haftvermittler | • 100 | 10 |
| (3) | • Polyethylen geringer Dichte (LDPE), E-Modul 260 MPa <br> • Mittels Metallocen-Katalyse hergestelltes Ethylen-Copolymer, E-Modul <330 MPa | • 70 <br> • 30 | 65 |
| (4) | • Haftvermittler | • 100 | 10 |
| (5) | • Polyethylen geringer Dichte (LDPE), E-Modul 260 MPa <br> • Mittels Metallocen-Katalyse hergestelltes Ethylen-Copolymer, E-Modul <330 MPa | • 70 <br> • 30 | 75 |
| Gesamte Folie | Gesamt- E-Modul (MD/TD): 186/187 MPa | | Gesamtdicke: 200 μm |

**Beispiel 4 (Erfindungsgemäße Mehrschichtfolie)**

| Schicht-Nummer | Zusammensetzung | Anteil in Schicht in % | Dicke in μm |
|---|---|---|---|
| (1) | • Polyamid mit E-Modul ca. 400 MPa | • 100 | 40 |
| (2) | • Haftvermittler | • 100 | 10 |
| (3) | • Polyethylen geringer Dichte (LDPE), E-Modul 260 MPa <br> • Mittels Metallocen-Katalyse hergestelltes Ethylen-Copolymer, E-Modul <330 MPa | • 70 <br> • 30 | 65 |
| (4) | • Haftvermittler | • 100 | 10 |
| (5) | • Polyethylen geringer Dichte (LDPE), E-Modul 260 MPa <br> • Mittels Metallocen-Katalyse hergestelltes Ethylen-Copolymer, E-Modul <330 MPa | • 70 <br> • 30 | 75 |
| Gesamte Folie | Gesamt- E-Modul (MD/TD): 182/181 MPa | | Gesamtdicke: 200 μm |

**Beispiel 5 (Erfindungsgemäße Mehrschichtfolie)**

| Schicht-Nummer | Zusammensetzung | Anteil in Schicht in % | Dicke in μm |
|---|---|---|---|
| (1) | • Polyamid mit E-Modul < 200 MPa | • 100 | 40 |
| (2) | • Haftvermittler | • 100 | 10 |
| (3) | • Polyethylen geringer Dichte (LDPE), E-Modul 260 MPa <br> • Polares Copolymer aus Ethylen und Butylacrylat mit niedriger Kristallität, E-Modul 60 MPa | • 40 <br> 60 | 150 |
| Gesamte Folie | Gesamt- E-Modul (MD/TD): 140/141 MPa | | Gesamtdicke: 200 μm |

**Beispiel 6 (Erfindungsgemäße Mehrschichtfolie)**

| Schicht-Nummer | Zusammensetzung | Anteil in Schicht in % | Dicke in μm |
|---|---|---|---|
| (1) | • Polyamid mit E-Modul < 200 MPa | • 100 | 40 |
| (2) | • Haftvermittler | • 100 | 10 |
| (3) | • Mittels Metallocen-Katalyse hergestelltes Ethylen-basiertes Octen-Plastomer, E-Modul 65 MPa<br>• Polyethylen geringer Dichte (LDPE), E-Modul 260 MPa | • 90<br><br>• 10 | 70 |
| Gesamte Folie | Gesamt- E-Modul (MD/TD): 124/124 MPa | | Gesamtdicke: 120 μm |

**Beispiel 7 (Erfindungsgemäße Mehrschichtfolie), Polyamid-Mischung**

| Schicht-Nummer | Zusammensetzung | Anteil in Schicht in % | Dicke in μm |
|---|---|---|---|
| (1) | • Copolyamid mittlerer Viskosität, E-Modul 1200 MPa<br>• Polyamid mit E-Modul < 200 MPa | • 88<br>• 12 | 40 |
| (2) | • Haftvermittler | • 100 | 10 |
| (3) | • Polyethylen geringer Dichte (LDPE), E-Modul 260 MPa<br>• Mittels Metallocen-Katalyse hergestelltes Ethylen-Copolymer, E-Modul <330 MPa | • 70<br>• 30 | 65 |
| (4) | • Haftvermittler | • 100 | 10 |
| (5) | • Polyethylen geringer Dichte (LDPE), E-Modul 260 MPa<br>• Mittels Metallocen-Katalyse hergestelltes Ethylen-Copolymer, E-Modul <330 MPa | • 70<br>• 30 | 75 |
| Gesamte Folie | Gesamt- E-Modul (MD/TD): 220/225 MPa | | Gesamtdicke: 200 μm |

**Beispiel 8 (Erfindungsgemäße Mehrschichtfolie), Polyamid-Mischung**

| Schicht-Nummer | Zusammensetzung | Anteil in Schicht in % | Dicke in μm |
|---|---|---|---|
| (1) | • Copolyamid mittlerer Viskosität, E-Modul 1200 MPa<br>• Polyamid mit E-Modul < 200 MPa | • 88<br>• 12 | 40 |
| (2) | • Haftvermittler | • 100 | 10 |
| (3) | • Polyethylen geringer Dichte (LDPE), E-Modul 260 MPa<br>• Mittels Metallocen-Katalyse hergestelltes Ethylen-Copolymer, E-Modul <330 MPa | • 70<br>• 30 | 25 |
| (4) | • Haftvermittler | • 100 | 10 |
| (5) | • Polyethylen geringer Dichte (LDPE), E-Modul 260 MPa<br>• Mittels Metallocen-Katalyse hergestelltes Ethylen-Copolymer, E-Modul <330 MPa | • 70<br>• 30 | 35 |
| Gesamte Folie | Gesamt- E-Modul (MD/TD): 205/205 MPa | | Gesamtdicke: 120 μm |

**Messung der Dehnbarkeit (Aufblastest)**

Zur Messung der Dehnbarkeit wird eine 5 m lange durch Blasfolien-Co-Extrusion hergestellte Schlauchfolie, die einen Schlauchumfang von 1175 mm bis 1180 mm aufweist, an beiden Enden durch zwei Packer (Metallplatten) luftdicht verschlossen, wonach durch ein Ventil in einem der beiden Packer zunehmend Druckluft (bis zu über 1 bar) in die Schlauchfolie geleitet wird, bis diese platzt, wobei die maximale Dehnung ermittelt wird, indem der bis zum Platzen des Schlauches erzielte Außenumfang des Schlauches an seiner größten Stelle gemessen und mit dem anfänglichen Schlauchdurchmesser verglichen wird, wobei folgende Formel für die Dehnbarkeit gilt:

*Maximale Dehnbarkeit in % = [(Schlauchdurchmesser nach Aufblasen /*

*anfänglicher Schlauchdurchmesser vor dem Aufblasen) – 1] X 100.*

Die gleiche Formel gilt für den "Folienspleiß", d.h. dem ersten bemerkbaren Abriss einer Schicht der Schlauchfolie (ohne dass der gesamte Schlauch davon betroffen ist):

*Spleiß in % = [(Schlauchdurchmesser nach Aufblasen und erstem erkennbaren*

*Schichtabriss/anfänglicher Schlauchdurchmesser vor dem Aufblasen) – 1] X 100*

**Ergebnisse aus den Aufblastests bei -1 °C und 20 °C**

Tabelle 1 zeigt die Ergebnisse der Aufblastests für die Mehrschichtfolien V1 und V2, sowie für die erfindungsgemäßen Mehrschichtfolien B1 bis B8. Zur besseren Vergleichbarkeit sind in Klammern (Beispiele (Bsp. 1)- (Bsp. 4)) die Ergebnisse der Dehnbarkeitsmessung der in der DE 10 2010 023 764 A1 offenbarten Mehrschichtfolien gegeben.

Tabelle 1 Ergebnisse aus den Aufblastests

| Beispiel/ Vergleichsbeispiel | Dicke in $\mu$m (Zahl der Schichten) | Spleiß [%] -1 °C/20 °C | Dehnbarkeit [%] bis zum Platzen -1 °C/20 °C |
|---|---|---|---|
| V1 | 200 (5) | 5,1/15,9 | 15,8/80,5 |
| V2 | 120 (5) | 6,2/20,9 | 17,0/95,7 |
| B1 | 200 (5) | 17,3/40,2 | 135,9/175,2 |
| B2 | 120 (5) | 16,6/39,4 | 126,0/161,0 |
| B3 | 200 (5) | 11,4/28,3 | 101,7/135,2 |
| B4 | 200 (5) | 16,0/30,3 | 112,0/145,9 |
| B5 | 200 (3) | Kein Spleiß | 145,2/164,3 |
| B6 | 120 (3) | Kein Spleiß | 134,3/153,8 |
| B7 | 200 (5) | 10,2/26,7 | 100,2/127,9 |
| B8 | 120 (5) | 10,1/25,9 | 103,7/124,8 |
| (Bsp. 1) DE 10 2010 023 764 A1 | 140 (5) | Nicht angegeben | Nicht angegeben /80,2 |
| (Bsp. 2) DE 10 2010 023 764 A1 | 150 (5) | Nicht angegeben | Nicht angegeben /34,1 |
| (Bsp. 3) DE 10 2010 023 764 A1 | 140 (5) | Nicht angegeben | Nicht angegeben /39,4 |
| (Bsp. 4) DE 10 2010 023 764 A1 | 300 (5) | Nicht angegeben | Nicht angegeben /16,9 |

Die Folien aus den Vergleichsbeispielen 1 und 2 werden bereits als Schlauchinnenfolien für Schlauchlining-Aufbauten im Rahmen der grabenlosen Kanalsanierung eingesetzt. Obwohl diese Folien bei Temperaturen von ca. 15 bis 30°C bestens funktionieren, besteht die Gefahr, dass die mechanischen Eigenschaften dieser Folien bei geringeren Temperaturen, etwa bei -1 °C, unzureichend sind. Dies belegen auch die Ergebnisse der Vergleichsbeispiele 1 und 2. So tritt bei Vergleichsbeispiel V1 bei -1 °C ein Spleiß, d.h. ein erster feststellbarer Abriss von Folienschichten, schon bei einer Dehnung von 5,1 % auf, während er bei 20°C mit 15,9 % einen guten Wert aufweist. Analog verhält es sich bei der Folie aus dem Vergleichsbeispiel V2 (Spleiß bei -1 °C = 6,2 %, bei 20°C tritt der Spleiß erst bei 20,9 % ein). Die Folien aus den Vergleichsbeispielen V1 und V2 sind damit nur bedingt als Schlauchinnenfolien bei tiefen Temperaturen geeignet. Weiteres Indiz dafür ist die Dehnung bis zum Platzen der Folien aus V1 und V2. Die Folie aus V1 platzt bei -1 °C bereits bei 15,8 % Dehnung, die Folie aus V2 bei 17,0 %. Gefordert ist eine minimale Dehnbarkeit bis zum Platzen von 15 %, was die Folien aus V1 und V2 hier gerade noch erfüllen, in der Praxis häufig aber nicht erfüllen. Bei Temperaturen von 20°C besteht dieses Problem hingegen nicht. Hier werden Dehnungen bis zum Platzen bei V1 und V2 von über 80 % erzielt. Für die in der DE 10 2010 023 764 A1 offenbarten Folien (Bsp. 1) - (Bsp. 4) liegen keine Messwerte der Dehnbarkeit bei -1 °C vor. Da allerdings bereits bei 20°C die Dehnbarkeit dieser Folien gegenüber den erfindungsgemäßen Mehrschichtfolien der Beispiele B1- B8 um ein zehnfaches geringer ist (16,9 % vs. 175, 2 %) ist es sehr unwahrscheinlich, dass die in der DE 10 2010 023 764 A1 offenbarten Folien (Bsp. 1) - (Bsp. 4) bei -1 °C noch die geforderte minimale Dehnbarkeit bis zum Platzen von 15% aufweisen. Die Anwendbarkeit der in der DE 10 2010 023 764 A1 offenbarten Mehrschichtfolien ist somit auf wärmere Jahreszeiten bzw. Länder eingeschränkt. Und auch bei 20°C sind die in DE 10 2010 023 764 A1 offenbarten Mehrschichtfolien nur bedingt geeignet.

Mit den erfindungsgemäßen Folien aus den Beispielen B1 bis B8 werden nun im Rahmen des Aufblasversuchs weitaus bessere mechanische Werte erhalten. Bei allen erfindungsgemäßen Folien liegt der Spleiß bei -1 °C (und insbesondere bei 20°C) weitaus höher als bei den Folien aus V1 und V2. Bei den Folien aus B5 und B8 ist darüber hinaus überhaupt kein Spleiß feststellbar, weder bei niedrigen Temperaturen, noch bei höheren Temperaturen. Die Folien aus den Beispielen B1, B2, B4, B5 und B6 weisen demnach bis zur bei der Verwendung als Schlauchinnenfolie gewünschten Dehnung größer als 15 % überhaupt keinen Spleiß auf.

Besonders hervorzuheben ist bei den Folien aus den Beispielen B1 bis B8 die enorm verbesserte Dehnbarkeit bis zum Platzen der Schlauchfolie, die nur sehr geringfügig von der Temperatur beeinflusst wird. So zeigen überraschend sämtliche erfindungsgemäßen Folien eine Dehnbarkeit bis zum Platzen von über bzw. weit über 100 %, sowohl bei -1 °C, als auch bei 20°C. Hier heben sich die weichen Folien, d.h. die Folien mit einem niedrigen E-Modul (siehe unten, kleiner als 200 MPa, bevorzugt kleiner als 180 MPa) aus den Beispielen B1 (Dehnung bei -1 °C 135,9 %, Dehnung bei 20°C 175,2 %), B2 (Dehnung bei -1 °C 126,0 %, Dehnung bei 20°C 161,0 %), B5 (Dehnung bei -1 °C 145,2 %, Dehnung bei 20°C 164,3 %) und B6 (Dehnung bei -1 °C 134,3 %, Dehnung bei 20°C 153,8 %) besonders hervor. Im Vergleich zu den bisherigen Standard-Folien aus den Vergleichsbeispielen V1 und V2 zeigen die erfindungsgemäßen Folien aus den Beispielen B1 bis B8 bei -1 °C eine über 6-fache Dehnbarkeit bis zum Platzen des Schlauchs, während bei 20°C im Mittel eine doppelt so hohe Dehnbarkeit bis zum Platzen bei den erfindungsgemäßen Folien aus B1 bis B8 gefunden wurde. Im Ergebnis kann man also feststellen, dass die Gefahr des Platzens mit den erfindungsgemäßen Folien gebannt ist und sich diese Folien bei jeder Temperatur und Witterung besonders als Schlauchinnenfolien für Schlauchlining-Aufbauten eignen.

Wie die Beispiele B7 und B8 gegenüber den Vergleichsbeispielen V1 und V2 zeigen, kann die Dehnbarkeit bis zum Spleiß bzw. bis zum Platzen der Folie deutlich erhöht werden, wenn man eine Polyamid-Mischung einsetzt, bei der zumindest ein Polyamid einen niedrigen E-Modul unter 500 MPa aufweist. Bei Beispiel B7 wurde gegenüber dem Vergleichsbeispiel V1 statt dem Homo-Polyamid mit einem E-Modul von 2800 ein Polyamid mit einem E-Modul unter 200 MPa bzw. zwischen 1 und 200 MPa verwendet. Obwohl das Polyamid mit einem E-Modul kleiner als 200 MPa bzw. zwischen 1 und 200 MPa in der Polyamid-Mischung nur zu 12 % vorliegt, konnte damit die Dehnung bis zum Spleiß bei -1 °C und 20 °C mit Werten von 10,2 und 26,7 % verdoppelt bzw. nahezu verdoppelt werden. Zudem wurde dadurch auch die Dehnbarkeit bis zum Platzen deutlich erhöht (bei -1 °C von 15,8 % auf 100,2 %; bei 20°C von 80,5 % auf 127,9 %).

Der gleiche Trend stellte sich auch bei den 120 μ dicken Folien aus dem Vergleichsbeispiel V2 und dem Beispiel B8 ein.


**Messung der mechanischen Eigenschaften E-Modul und Durchstoßtest**

Im Rahmen der vorliegende Erfindung sowie bei sämtlichen Ausführungsbeispielen der vorliegenden Erfindung werden der E-Modul und die weiteren Zugeigenschaften nach DIN EN ISO 527- 1-3 mit einer Prüfgeschwindigkeit von 300 mm/min in Maschinenrichtung (MD) und Querrichtung (TD) gemessen. Hierbei wird als Prüfgerät für die Zugversuche eine Universalprüfmaschine "Instron" für die Messung des E-Moduls verwendet. Die Prüfung erfolgt an Streifen mit einer Breite von 15 mm, die längs zwischen zwei Griffabschnitte der Prüfmaschine eingespannt sind, wobei der Abstand der beiden Griffabschnitte zueinander 100mm beträgt und die Folienstreifen vor der Prüfung für 24 Stunden bei 23 °C und einer relativen Luftfeuchtigkeit von 50% konditioniert wurden.

Der Durchstoßtest wird gemäß JAS P 1019 unter Verwendung einer Universalprüfmaschine "Instron" mit einer Prüfgeschwindigkeit von 10 mm/min durchgeführt, wobei die Folienscheibe einen Durchmesser von 50 mm aufweist und die Nadel einen Durchmesser von 1 mm und eine runde Spitze mit einem Durchmesser von 0.5 mm aufweist und die Folienscheiben vor der Prüfung für 24 Stunden bei 23 °C und einer relativen Luftfeuchtigkeit von 50% konditioniert werden.

Die Messwerte der mechanischen Eigenschaften der Mehrschichtfolien der Vergleichsbeispiele V1 und V2, sowie der Beispiele B1 bis B8 sind in Tabelle 2 gegeben. In der vierten Spalte ist der Schmelzpunkt des jeweils verwendeten Polyamids (Smp. PA) in °C angegeben. Zugelastizitätsmodule (bzw. E-Module) und Bruchdehnung wurden sowohl in Maschinenrichtung (MD) und Querrichtung ("transverse direction", TD) gemessen.

**Tabelle 2 Ergebnisse der Messung der mechanischen Eigenschaften**

| Muster | Aufbau | Dicke μ | Smp. PA in °C | E-Modul in MPa MD/TD | Bruchdehnung % MD/TD | Durchstoß Kraft N / Energie mJ | Deformation in mm |
|---|---|---|---|---|---|---|---|
| V1 | PA/PE/PE | 200 | 192 | 287/307 | 325/342 | 12,6/39,2 | 6,2 |
| V2 | PA/PE/PE | 120 | 192 | 275/279 | 364/374 | 7,9/27,2 | 6,7 |
| B1 | PA/PE/PE | 200 | 172 | 175/170 | 554/530 | 5,9/19,2 | 10,3 |
| B2 | PA/PE/PE | 120 | 172 | 170/173 | 502/500 | 5,5/18,2 | 11,9 |
| B3 | PA/PE/PE | 200 | 188 | 186/187 | 504/523 | 6,9/22,2 | 9,8 |
| B4 | PA/PE/PE | 200 | 203 | 182/181 | 499/501 | 7,7/23,7 | 9,0 |
| B5 | PA/PE | 200 | 173 | 140/141 | 566/572 | 6,9/17,6 | 13,2 |
| B6 | PA/PE | 120 | 173 | 124/124 | 637/639 | 5,6/19,8 | 14,9 |
| B7 | PA/PE | 200 | 173 und 192°C | 220/225 | 509/519 | - | - |
| B7 | PA/PE | 120 | 173 und 192°C | 205/205 | 500/501 | - | - |

Die Messung der mechanischen Werte der Folien aus den Vergleichsbeispielen V1 und V2 sowie aus den Beispielen B1 bis B8 bei 23 °C gehen mit den Ergebnissen des Aufblastests konform. Die Standard-Folien aus V1 und V2 haben einen sehr hohen E-Modul von über 250 MPa und besitzen kein Polyamid mit einem E-Modul unter 250 MPa. Sie zeigen eine Bruchdehnung von maximal 374 % (V2, TD-Richtung). Im Gegensatz dazu sind alle erfindungsgemäßen Folien aus den Beispielen B1 bis B8 deutlich weicher und flexibler, da die E-Module stets unter 200 MPa liegen, bei B5 und B6 liegen sie sogar unter 150 MPa. Die E-Module der der Folien gemäß den Beispielen B7 und B8 liegen knapp oder geringfügig über 200 MPa (maximal 225 MPa). Es zeigt sich überraschenderweise aus den mechanischen Werten, dass je niedriger der E-Modul liegt, umso größer die Bruchdehnung wird. Dies war nicht zu erwarten. So zeigen die erfindungsgemäßen Folien aus den Beispielen B1 bis B8 jeweils Dehnbarkeiten in MD und TD-Richtung von wenigstens 500 %, bei der Folie mit dem niedrigsten E-Modul aus Beispiel B6 liegt die Dehnbarkeit sogar weit über 600 % für beide Prüfrichtungen. Wie der Durchstoßtest zeigt, sind die Folien aus V1 und V2 zwar gegenüber höheren Kräften resistenter (insbesondere V1 mit 12,6 N) als die erfindungsgemäßen Folien aus B1 bis B8, doch darauf kommt es offenbar bei der Verwendung als Schlauchinnenfolie nicht an. Es hat sich nämlich gezeigt, dass die erfindungsgemäßen Folien aus B1 bis B8 aufgrund ihrer hohen Flexibilität eine weitaus höhere Deformation aufweisen als die Folien aus V1 und V2. Die Deformation liegt bei den Folien aus B5 und B6 mehr als doppelt so hoch als bei den Folien aus V1 und V2. Dieses Verhalten der erfindungsgemäßen Folien hat sich als besonders günstig herausgestellt, da die Folien aus den Beispielen B1 bis B8 einer auf die Folie einwirkenden äußeren Belastung viel besser ausweichen können und somit weitaus weniger geschädigt werden, etwa beim Einbau und der Installation des Schlauchlining-Aufbaus in einen zu sanierenden Kanal. Offenbar gibt die flexiblere, besser deformierbare Folie nach, während sich eine weniger flexiblere, starrere Folie der Belastung aussetzt, dieser weniger ausweichen kann und von dieser schließlich geschädigt wird.

**Messung der Abriebbeständigkeit**

Gemäß den Vorgaben der DIN EN 295, Teil 3, wird ein durch Blasfolien- Co-Extrusion hergestellter Schlauchabschnitt von (1.000 +/- 10) mm Länge, welcher durch seitliche Stirnplatten abgeschlossen ist, mit einem Sand-Kies-Wasser-Gemisch gefüllt. Die Prüfmaterialmenge von 5,0 kg gemäß DIN EN 295-3, Tabelle 3, wird in den Schlauchabschnitt eingebracht und anschließend bis zu einer Füllhöhe von (38 +/- 2) mm mit Wasser aufgefüllt. Der Schlauchabschnitt wird wechselweise in Längsrichtung um 22,5° geneigt, so dass durch die Bewegung des Prüfmaterials ein Abrieb an der Schlauchinnenseite hervorgerufen wird. Als Prüfmaterial wird, den Vorgaben entsprechend, natürlicher, ungebrochener, rundkörniger Quarzkies verwendet.

Zur Ermittlung des Oberflächenabtrages wird der Versuch über insgesamt 300.000 Lastspiele durchgeführt. Alle 100.000 Lastspiele wird die Abriebtiefe in mm ermittelt. Der Kippvorgang wird mit einer Frequenz von etwa 20 Lastspielen / Minute eingestellt.

**Ergebnisse der Messung der Abriebbeständigkeit nach der Darmstädter Kipprinne**

Die Testergebnisse der Abriebbeständigkeit sind in Tabelle 3 aufgeführt.

**Tabelle 3 Ergebnisse des Tests der Abriebbeständigkeit gemäß der Darmstädter Kipprinne**

| Muster | Abriebverhalten nach DIN EN 295-3 (Darmstädter Kipprinne, Mindestlastwechsel 100.000); Abriebtiefe in mm |
|---|---|
| V1 | 0,03 |
| V2 | 0,03 |
| B1 | 0,005 |
| B2 | 0,005 |
| B3 | 0,01 |
| B4 | 0,01 |
| B5 | 0,001 |
| B6 | 0,001 |
| B7 | 0,015 |
| B8 | 0,015 |

Der Versuch zur Prüfung des Abriebverhaltens nach DIN EN 295-3 (Darmstädter Kipprinne, Mindestlastwechsel 100.000) wird durchgeführt, um festzustellen, ob ein Schlauchlining-Aufbau dem Abrieb im Kanal standhält. Abrieb wird durch den im Kanalnetz üblichen Wasser-Feststoff-Transport, hauptsächlich im Sohlenbereich des Kanals, hervorgerufen.

Dieses Verfahren wird u.a. in den Richtlinien des Deutschen Instituts für Bautechnik (DIBt), Berlin für Auswahl und Anwendung von Innenauskleidungen mit Kunststoffbauteilen für Misch- und Schmutzwasserkanälen benannt. Die Schlauchlining-Aufbauten erfüllen die Anforderungen an die Abriebfestigkeit entsprechend den Anforderungen des DIBt; mit einer Abriebtiefe von maximal nur 0,01 mm nach 100.000 Lastspielen wurde bei den erfindungsgemäßen Folien aus den Beispielen B1 bis B6 eine hervorragende Abriebfestigkeit nachgewiesen.

Die Messungen spielen dann eine Rolle, wenn die Schlauchinnenfolie nach dem Aushärten des Schlauchlining-Aufbaus im Kanal verbleibt und insbesondere dann, wenn sie einen integralen Bestandteil des Rohrs im Rohr bildet.

Wie aufgrund der Eigenschaften der Mehrschichtfolien gemäß der vorliegenden Erfindung, die aus den mechanischen Messungen hervorgehen, vermutet werden kann, reiben sich härtere Folien mit höherem E-Modul, die weniger flexibel sind (V1 und V2), weitaus stärker ab als die erfindungsgemäßen Folien aus den Beispielen B1 bis B8. Dieses Ergebnis ist überraschend, insbesondere vor dem Hintergrund, dass Folien mit höherer Starrheit und höherem E-Modul erst mit viel höherer Kraft durchstoßen und somit verletzt werden können (V1 und V2), als flexiblere, weichere Folien mit niedrigerem E-Modul (B1 bis B8). So zeigen die Folien aus den Vergleichsbeispielen 1 und 2 eine Abriebtiefe von jeweils 0,03 mm. Das ist zwar ein sehr guter Wert, da dies nur sehr wenig Abrieb bedeutet, aber die erfindungsgemäßen Folien aus B1 und B2 haben nur eine Abriebtiefe von 0,005 mm, und die Folien aus B5 und B6 sogar nur eine Abriebtiefe von 0,001 mm (bzw. 1 $\mu$), den messbaren Abrieb unterschreitet. Damit eignen sich die erfindungsgemäßen Folien hervorragend als Schlauchinnenfolien.

Untersuchungen in einem auf -20°C gehaltenen Gefrierraum zeigten die folgenden Ergebnisse:

Tabelle 4 Ergebnisse aus den Aufblastests bei -20°C

| Beispiel/Vergleichsbeispiel | Dicke in $\mu$m (Zahl der Schichten) | Spleiß [%] -20 °C | Dehnbarkeit [%] bis zum Platzen -20°C |
|---|---|---|---|
| V1 | 200 (5) | 3,0 | direkt nach Spleiß geplatzt |
| V2 | 120 (5) | 3,3 | direkt nach Spleiß geplatzt |
| B1 | 200 (5) | 12,3 | 115,0 |
| B2 | 120 (5) | 10,4 | 109,,7 |
| B3 | 200 (5) | 10,1 | 92,7 |
| B4 | 200 (5) | 15,8 | 101,4 |
| B5 | 200 (3) | Kein Spleiß | 125,1 |
| B6 | 120 (3) | Kein Spleiß | 127,2 |
| B7 | 200 (5) | 10,0 | 88,9 |
| B8 | 120 (5) | 10,2 | 87,3 |
| (Bsp. 1) DE 10 2010 023 764 A1 | 140 (5) | Nicht angegeben | Nicht angegeben |
| (Bsp. 2) DE 10 2010 023 764 A1 | 150 (5) | Nicht angegeben | Nicht angegeben |
| (Bsp. 3) DE 10 2010 023 764 A1 | 140 (5) | Nicht angegeben | Nicht angegeben |
| (Bsp. 4) DE 10 2010 023 764 A1 | 300 (5) | Nicht angegeben | Nicht angegeben |

Nach alledem ist die erfindungsgemäße Mehrschichtfolie auch bei sehr niedrigen Außentemperaturen, insbesondere bei -20°C als Schlauchliner zur grabenlosen Kanalsanierung bestens geeignet. Aus den bislang gemachten Erfahrungen bei derartigen Anwendungen läßt sich schließen, dass selbst in einem Temperaturbereich von -80°C bis 0°C noch Dehnbarkeiten von 80 bis 1000%, insbesondere 80 bis 400% und bevorzugt 80 bis 200% erreichen, wobei sich die maximale Dehnbarkeit in % berechnet aus [(Schlauchdurchmesser nach dem Aufblasen/anfänglicher Schlauchdurchmesser vor dem Aufblasen) - 1] x 100.

**Patentansprüche**

1. Eine für elektromagnetische Strahlung in einem Wellenlängenbereich von 150 bis 600 nm zumindest teilweise durchlässige und für organische volatile Substanzen mit einer Molekularmasse von 20 bis 300 gmol$^{-1}$ undurchlässige, polymere Mehrschichtfolie in Schlauchform, umfassend mindestens eine Polyamidschicht sowie mindestens eine weitere Schicht aus einem anderen Polymermaterial,

   wobei die Mehrschichtfolie einen Zugelastizitätsmodul von 1 bis 250 MPa aufweist, gemessen nach DIN EN ISO 527-1-3 mit einer Prüfgeschwindigkeit von 300 mm/min in Maschinenrichtung (MD) und Querrichtung (TD), nach 24-stündiger Konditionierung bei 23°C und einer relativen Luftfeuchtigkeit von 50%,
   **dadurch gekennzeichnet,**
   **dass** der aus der Mehrschichtfolie gebildete Schlauch in radialer Richtung bei einer Temperatur von -40°C bis 0°C eine Dehnbarkeit im Aufblastest bis zum Platzen zwischen 80 bis 400% aufweist, wobei die maximale Dehnbarkeit in % sich berechnet aus [(Schlauchdurchmesser nach dem Aufblasen/anfänglicher Schlauchdurchmesser vor dem Aufblasen) - 1] x 100,
   **dass** mindestens ein Polyamid der mindestens einen Polyamidschicht einen Zugelastizitätsmodul von 1 bis 500 MPa aufweist, gemessen nach DIN EN ISO 527-1-3 mit einer Prüfgeschwindigkeit von 300 mm/min in Maschinenrichtung (MD) und Querrichtung (TD), nach 24-stündiger Konditionierung bei 23°C und einer relativen Luftfeuchtigkeit von 50%, und

**dass** die mindestens eine weitere Schicht mindestens eine Ausgangssubstanz umfasst, welche ausgewählt ist aus der Gruppe, bestehend aus: Ethylen-(Meth) Acrylat-Copolymer, thermoplastisches Olefin- Homo- oder Copolymer, Ethylen-Homopolymer (Polyethylen, PE), Polyethylen niedriger Dichte (LDPE), LLDPE (Linear low density polyethylene), Polyethylen hoher Dichte (HDPE), auf Basis von Metallocen-Katalysatoren polymerisiertes PE (mPE), Polypropylen-Homopolymere (Polypropylen, PP), PP Random Copolymer, Butylen-Homopolymere (Polybutylen, PB), Isobutylen-Homopolymere (Polyisobutylen, PI),Ethylen-Vinylalkohol-Copolymer (EVOH), Polyvinylalkohol (PVOH), zyklisches Olefin-Copolymer (COC), thermoplastische Elastomere (TPE), insbesondere auf Basis von PA-Elastomer, besonders PA 12 Elastomer, Blockcopolymere aus PA12-Segmenten und Polyethersegmenten oder auf Urethanbasis (TPU) und einer Kombination zweier oder mehrerer der genannten Ausgangssubstanzen.

2. Mehrschichtfolie nach wenigstens einem der vorhergehenden Ansprüche, **dadurch gekennzeichnet, dass** die organischen volatilen Substanzen mit einer Molekularmasse von 20 bis 300 $gmol^{-1}$ ausgewählt sind aus der Gruppe bestehend aus organischen Monomeren, insbesondere Styrol, Divinylbenzol, Ethen, Ethin, Propylen und organischen Lösungsmitteln, insbesondere Ethanol, Toluol und Aceton.

3. Mehrschichtfolie nach wenigstens einem der vorhergehenden Ansprüche, **dadurch gekennzeichnet, dass** wenigstens eine der Schichten wenigstens ein Additiv enthält, welches ausgewählt ist aus der Gruppe, bestehend aus: Antistatika, Antioxidantien, Oxygen Scavengers, Antiblockmittel, Antifogmittel, antimikrobiellen Wirkstoffen, Farbstoffen, Farbpigmenten, Stabilisierungsmittel, vorzugsweise Hitzestabilisatoren, Prozess-Stabilisatoren, Prozesshilfsmittel, Flammschutzmittel, Nukleierungsmittel, Kristallisationsmittel, vorzugsweise Kristallkeimbildner, Gleitmittel, optische Aufheller, Flexibilisierungsmittel, Siegelmittel, Weichmacher, Silane, Abstandshalter, Füllstoffe, Peel-Additive, Wachse, Benetzungsmittel, oberflächenaktive Verbindungen, vorzugsweise Tenside, UV-Stabilisatoren und Dispergiermittel.

4. Mehrschichtfolie nach wenigstens einem der vorhergehenden Ansprüche, **dadurch gekennzeichnet, dass** die Mehrschichtfolie als Innenschlauch eines Schlauchliners zur grabenlosen Kanalsanierung ausgebildet ist.

5. Mehrschichtfolie nach wenigstens einem der vorhergehenden Ansprüche, **dadurch gekennzeichnet, dass** die Polyamidschicht ein Homo- oder Copolyamid enthält, welches ausgewählt ist aus der Gruppe bestehend aus: thermoplastischen aliphatischen, teilaromatischen oder aromatischen Homo- oder Copolyamiden, insbesondere PA6, PA12, PA66, PA10, PA 11, PA 666, PA6I, PA 6,12 und PA6T, PA Elastomeren, Terpolyamiden, Quaterpolyamiden, Blockcopolymeren aus PA12-Segmenten und Polyethersegmenten oder einer Mischung aus mindestens zwei der genannten Polyamide.

6. Mehrschichtfolie nach wenigstens einem der vorhergehenden Ansprüche, **dadurch gekennzeichnet, dass** die Dicke der Mehrschichtfolie im Bereich von 10 bis 4000 $\mu$m, vorzugsweise von 40 bis 2000 $\mu$m, besonders bevorzugt von 60 bis 1000 $\mu$m, insbesondere von 80 bis 400 $\mu$m beträgt und die Polyamidschicht eine Schichtdicke von 1 $\mu$m bis 200 $\mu$m, vorzugsweise zwischen 5 und 100 $\mu$m, besonders bevorzugt zwischen 20 $\mu$m und 80 $\mu$m, aufweist.

7. Verwendung einer Mehrschichtfolie gemäß einem der Ansprüche 1 bis 6 als Schlauchinnenfolie für Schlauchliner bei der grabenlosen Kanalsanierung oder als Gleitfolie, Preliner, Stütz- oder Kalibrierschlauch eines Schlauchliners bei der grabenlosen Kanalsanierung.

8. Schlauchlining-Aufbau zur grabenlosen Kanalsanierung, mit einer Mehrschichtfolie gemäß wenigstens einem der Ansprüche 1 bis 6 als innen liegendem Schlauch und einer UV-Strahlung und/oder sichtbares Licht absorbierende, kanalwand-seitig liegende ein- oder mehrschichtige Schlauchfolie als außen liegendem Schlauch, wobei zwischen dem innen liegenden Schlauch und dem außen liegenden Schlauch ein mit einem reaktiven Kunststoffharz getränktes Trägermaterial vorgesehen ist.

9. Schlauchlining-Aufbau nach Anspruch 8, **dadurch gekennzeichnet, dass** bei dem aus der Mehrschichtfolie gebildeten innen liegendem Schlauch die mindestens eine weitere Schicht radial innenseitig von der mindestens einen Polyamidschicht angeordnet ist und Polypropylen (PP) als Polymermaterial umfasst.

10. Kanalabschnitt mit einem Kanal zum Transport von Flüssigkeiten, Gasen oder Feststoffen, der mittels eines Schlauchlining-Aufbaus gemäß Anspruch 8 oder 9 saniert ist, und welcher derart angeordnet ist, dass er an der zu den zu transportierenden Flüssigkeiten, Gasen oder Feststoffen gerichteten Kanalwand anliegt und bei welchem ein zwischen einem innen liegenden Schlauch und einem kanalwandseitig liegenden Schlauch ein Trägermaterial angeordnet ist, welches ein ausgehärtetes Kunststoffharz aufweist.

11. Kanalabschnitt nach Anspruch 10, **dadurch gekennzeichnet, dass** eine als Schlauchinnenfolie vorgesehenene Mehrschichtfolie gemäß wenigstens einem der Ansprüche 1 bis 7 in dem sanierten Kanalabschnitt verbleibt.

12. Kanalabschnitt nach Anspruch 10, **dadurch gekennzeichnet, dass** eine als Schlauchinnenfolie vorgesehenene Mehrschichtfolie gemäß wenigstens einem der Ansprüche 1 bis 7 aus dem sanierten Kanalabschnitt entfernt ist.

## Claims

1. A polymer tubular multilayer film that is at least in part translucent to electromagnetic radiation of a wavelength range of 150 to 600 nm and impermeable to organic volatile substances having a molecular mass of 20 to 300 gmol$^{-1}$ and includes at least one polyamide layer as well as at least one further layer of a different polymer material, wherein

   the multilayer film has a tension modulus of elasticity of 1 to 250 MPa, measured in accordance with DIN EN ISO 527-1-3 with a test speed of 300 mm/min in machine direction (MD) and transverse direction (TD) after conditioning for 24 hours at 23°C and a relative humidity of 50%,
   **characterized in that**
   the hose formed of the multilayer film in a radial direction and at a temperature of -40°C to 0°C, in a blow-up test up to bursting, has an elasticity of between 80 to 400%, wherein the maximum elasticity in % is calculated from [(hose diameter after blow-up /initial hose diameter prior to blow-up) - 1] x 100,
   that at least one polyamide of the at least one polyamide layer has a tension modulus of elasticity of 1 to 500 MPa, measured in accordance with DIN EN ISO 527-1-3 with a test speed of 300 mm/min in machine direction (MD) and transverse direction (TD) after conditioning for 24 hours at 23°C and a relative humidity of 50%, and
   that the at least one further layer includes a starting substance selected from the group consisting of: ethylene (meth) acrylate copolymer, thermoplastic olefin-homo- or copolymer, ethylene homo polymer (polyethylene, PE), polyethylene of low density (LDPE), LLDPE (linear low density polyethylene), polyethylene of high density (HDPE), PE polymerized on the basis of metallocene catalysts (mPE), polypropylene homo polymers (polypropylene, PP), polypropylene random copolymers, butylene homo polymers (polybutylene, PB), isobutylene homo polymers (polyisobutylene, PI), ethylene vinyl alcohol copolymer (EVOH), polyvinyl alcohol (PVOH), cyclic olefin copolymer (COC), thermoplastic elastomers (TPE), particularly on the basis of PA elastomers, preferably PA 12 elastomers, block copolymers of PA12 segments and polyether segments or on a urethane basis (TPU) and a combination of two or more of the above-indicated starting substances.

2. The multilayer film according to at least one of the preceding claims, **characterized in that** the organic volatile substances having a molecular mass of 20 to 300 gmol$^{-1}$ are selected from the group consisting of organic monomers, in particular styrene, divinylbenzene, ethene, ethyne, propylene and organic solvents, in particular ethanol, toluene, and acetone.

3. The multilayer film according to at least one of the preceding claims, **characterized in that** at least one layer includes at least one additive that is selected from the group consisting of: antistatic agents, antioxidants, oxygen scavengers, antiblocking agents, anti-fog agents, antimicrobial agents, dyes, color pigments, stabilizers, preferably heat stabilizers, process stabilizers, process aids, flame retardants, nucleating agents, crystallizing agents, preferably crystal nucleating agents, lubricants, optical brighteners, flexibilization agents, sealing agents, softeners, silanes, spacers, fillers, peel-additives, waxes, wetting agents, surface active compounds, preferably tensides, UV stabilizers and disperging agents.

4. The multilayer film according to at least one of the preceding claims, **characterized in that** the multilayer film is formed as an inner hose of a pipe liner for trenchless sewer rehabilitation.

5. The multilayer film according to at least one of the preceding claims, **characterized in that** the polyamide layer includes a homo or copolyamide that is selected from the group consisting of: thermoplastic, aliphatic, partially aromatic or aromatic homo or copolyamides, in particular PA6, PA12, PA66, PA10, PA 11, PA 666, PA6I, PA 6,12, PA6T, PA elastomers, terpolyamides, quaterpolyamides, block copolymers of PA12 segments and polyether segments or a mixture of at least two of the above-indicated polyamides.

6. The multilayer film according to at least one of the preceding claims, **characterized in that** the thickness of the multilayer film is in a range of 10 to 4000 $\mu$m, preferably 40 to 2000 $\mu$m, particularly preferred from 60 to 1000 $\mu$m, in particular 80 to 400 $\mu$m, and the polyamide layer has a layer thickness of 1 $\mu$m to 200 $\mu$m, preferably between 5 and 100 $\mu$m, particularly preferred between 20 $\mu$m and 80 $\mu$m.

7. Use of the multilayer film according to any of the preceding claims 1 to 6 as tubular inner film for pipe liners in trenchless sewer rehabilitation or as sliding film, preliner, reinforcing or calibration hose of pipe liners in trenchless sewer rehabilitation.

8. Pipe lining construction for trenchless sewer rehabilitation including a multilayer film according to at least one of claims 1 to 6 as inner hose and a single layer or multilayer tubular film absorbing UV radiation and/or visible light and located on the sewer wall side as outer hose, wherein a carrier material impregnated with a reactive synthetic resin is provided between the inner hose and the outer hose.

9. The pipe lining construction according to claim 8, **characterized in that** in the inner hose formed of the multilayer film the at least one further layer is arranged at a radially inner side from the at least one polyamide layer and includes polypropylene (PP) as polymer material.

10. Sewer section of a sewer for the transport of liquids, gases or solids, that is rehabilitated using the pipe lining construction according to claims 8 or 9, and arranged so as to fit closely to the sewer wall in the direction of the liquids, gas or solids to be transported, and in which a carrier material is located between an inner hose and a hose lying on the side of the sewer wall, said carrier material including a cured synthetic resin.

11. Sewer section according to claim 10, **characterized in that** the multilayer film provided as tubular inner film according to at least one of claims 1 to 7 remains in the rehabilitated sewer section.

12. Sewer section according to claim 10, **characterized in that** the multilayer film provided as tubular inner film according to at least one of claims 1 to 7 is removed from the rehabilitated sewer section.

**Revendications**

1. Feuille multicouche polymère de forme tubulaire, qui est au moins partiellement perméable au rayonnement électromagnétique dans une gamme de longueurs d'onde de 150 à 600 nm et imperméable aux substances organiques volatiles ayant une masse moléculaire de 20 à 300 gmol$^{-1}$, comprenant au moins une couche de polyamide ainsi qu'au moins une couche supplémentaire d'une autre matière polymère,

la feuille multicouche ayant un module d'élasticité en traction de 1 à 250 MPa, mesuré selon DIN EN ISO 527-1-3 à une vitesse d'essai de 300 mm/min dans le sens machine (MD) et dans le sens transversal (TD), après un conditionnement de 24 heures à 23°C et une humidité relative de l'air de 50%,
**caractérisée en ce que**,
la gaine formée à partir de la feuille multicouche présente dans la direction radiale, à une température de -40°C à 0°C, une extensibilité dans l'essai de gonflage jusqu'à éclatement comprise entre 80 et 400%, l'extensibilité maximale en % étant calculée à partir de [(diamètre de la gaine après le gonflage/diamètre initial de la gaine avant le gonflage) - 1] x 100,
au moins un polyamide de la au moins une couche de polyamide présente un module d'élasticité en traction de 1 à 500 MPa, mesuré selon DIN EN ISO 527-1-3 à une vitesse d'essai de 300 mm/min dans le sens machine (MD) et dans le sens transversal (TD), après un conditionnement de 24 heures à 23°C et une humidité relative de l'air de 50%, et
**en ce que** la au moins une couche supplémentaire comprend au moins une substance initiale qui est sélectionnée dans le groupe composé de : copolymère (méth) acrylate d'éthylène, homopolymère ou copolymère d'oléfine thermoplastique, homopolymère d'éthylène (polyéthylène, PE), polyéthylène à basse densité (PEBD), PELBD (polyéthylène linéaire à basse densité), polyéthylène à haute densité (PEHD), PE polymérisé à base de catalyseurs métallocènes (mPE), homopolymères de polypropylène (polypropylène, PP), copolymère statistique PP, homopolymères de butylène (polybutylène, PB), homopolymères d'isobutylène (polyisobutylène, PI), copolymère éthylène-alcool vinylique (EVOH), alcool polyvinylique (PVOH), copolymère oléfinique cyclique (COC), élastomères thermoplastiques (TPE), en particulier à base d'élastomère PA, en particulier élastomère PA 12, copolymères séquencés de segments PA12 et segments de polyéther ou à base d'uréthane (TPU) et une combinaison de deux ou de plusieurs des substances initiales citées.

2. Feuille multicouche selon au moins l'une des revendications précédentes, **caractérisée en ce que** les substances organiques volatiles ayant une masse moléculaire de 20 à 300 gmol$^{-1}$ sont sélectionnées dans le groupe composé de monomères organiques, en particulier styrène, divinylbenzène, éthylène, éthine, propylène et solvants organiques, en particulier éthanol, toluène et acétone.

3. Feuille multicouche selon au moins l'une des revendications précédentes, **caractérisée en ce qu'**au moins une des couches contient au moins un additif qui est sélectionné dans le groupe composé de : agents antistatiques, antioxydants, éliminateurs d'oxygène, agents antiblocage, agents antivoile, ingrédients actifs antimicrobiens, colorants, pigments colorants, agents stabilisants, de préférence stabilisants thermiques, stabilisants de processus, adjuvants de processus, retardateurs de flamme, agents de nucléation, agents de cristallisation, de préférence agents de nucléation cristalline, agents de glisse, azurants optiques, des agents flexibilisants, agents de scellage, plastifiants, silanes, des séparateurs, matières de remplissage, additifs de pelage, cires, agents mouillants, des composés tensioactifs, de préférence tensides, stabilisants UV et agents de dispersion.

4. Feuille multicouche selon au moins l'une des revendications précédentes, **caractérisée en ce que** la feuille multicouche se présente sous la forme d'une gaine intérieure d'une gaine de gainage de tuyaux pour la réhabilitation sans tranchée de canalisations.

5. Feuille multicouche selon au moins l'une des revendications précédentes, **caractérisée en ce que** la couche de polyamide contient un homopolyamide ou un copolyamide qui est sélectionné dans le groupe composé de : homopolyamides ou copolyamides aliphatiques thermoplastiques, partiellement aromatiques ou aromatiques, en particulier PA6, PA12, PA66, PA10, PA11, PA666, PA6I, PA6,12 et PA6T, élastomères PA, terpolyamides, quaterpolyamides, copolymères séquencés de segments PA12 et segments polyéther ou un mélange de deux au moins des polyamides cités.

6. Feuille multicouche selon au moins l'une des revendications précédentes, **caractérisée en ce que** l'épaisseur de la feuille multicouche se situe dans une plage entre 10 et 4000 $\mu$m, de préférence entre 40 et 2000 $\mu$m, de manière particulièrement préférée entre 60 et 1000 $\mu$m, en particulier entre 80 et 400 $\mu$m et la couche de polyamide présente une épaisseur de couche comprise entre 1 $\mu$m et 200 $\mu$m, de préférence entre 5 et 100 $\mu$m, de manière particulièrement préférée, entre 20 $\mu$m et 80 $\mu$m.

7. Utilisation d'une feuille multicouche selon l'une des revendications 1 à 6 en tant que feuille tubulaire intérieure pour gaine de gainage de tuyaux dans la réhabilitation sans tranchée de canalisations ou en tant que feuille glissante, pré-gaine, gaine de soutien ou de calibrage d'une gaine de gainage de tuyaux dans la réhabilitation sans tranchée de canalisations.

8. Structure de gainage de tuyaux pour la réhabilitation sans tranchée de canalisations, comprenant une feuille multicouche selon au moins l'une des revendications 1 à 6 en tant que gaine intérieure et une feuille tubulaire monocouche ou multicouche absorbant le rayonnement UV et/ou la lumière visible, disposée sur le côté de la paroi de la canalisation en tant que gaine extérieure, dans laquelle un matériau support imprégné d'une résine plastique réactive est prévu entre la gaine intérieure et la gaine extérieure.

9. Structure de gainage de tuyaux selon la revendication 8, **caractérisée en ce que** dans la gaine intérieure formée à partir de la feuille multicouche, la au moins une couche supplémentaire est disposée radialement à l'intérieur de la au moins une couche de polyamide et contient du polypropylène (PP) en tant que matière polymère.

10. Tronçon de canalisation avec une canalisation pour transporter des liquides, des gaz ou des matières solides, qui est réhabilité au moyen d'une structure de gainage de tuyaux selon la revendication 8 ou 9, et qui est disposé de sorte qu'il adhère à la paroi de canalisation orientée vers les liquides, les gaz ou les matières solides à transporter et dans lequel un matériau support est disposé entre une gaine intérieure et une gaine disposée sur le côté de la paroi de la canalisation, lequel matériau support contient une résine plastique durcie.

11. Tronçon de canalisation selon la revendication 10, **caractérisé en ce qu'**une feuille multicouche selon au moins l'une des revendications 1 à 7, prévue sous la forme d'une feuille tubulaire intérieure, reste dans le tronçon de canalisation réhabilité.

**12.** Tronçon de canalisation selon la revendication 10, **caractérisé en ce qu'**une feuille multicouche selon au moins l'une des revendications 1 à 7, prévue sous la forme d'une feuille tubulaire intérieure, est retirée du tronçon de canalisation réhabilité.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007054350 A1
- DE 102007038869 B4
- EP 155256 B1
- WO 2010075946 A1
- DE 202010016048 U1

- EP 0167742 A2
- DE 102010023764 A1
- EP 0342897 A2